(19) Europäisches Patentamt / European Patent Office / Office européen des brevets

(11) **EP 2 804 311 B1**

(12) **EUROPEAN PATENT SPECIFICATION**

(45) Date of publication and mention
of the grant of the patent:
**04.10.2017 Bulletin 2017/40**

(51) Int Cl.:
*H02P 27/08* (2006.01)    *H02P 6/06* (2006.01)
*H02P 21/26* (2016.01)    *H02P 21/14* (2016.01)
*H02P 21/18* (2016.01)    *H02P 23/14* (2006.01)

(21) Application number: **12865488.6**

(22) Date of filing: **06.12.2012**

(86) International application number:
**PCT/JP2012/007815**

(87) International publication number:
**WO 2013/105173 (18.07.2013 Gazette 2013/29)**

(54) **INVERTER CONTROL DEVICE**

UMRICHTERSTEUERUNGSVORRICHTUNG

DISPOSITIF DE COMMANDE D'ONDULEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.01.2012 JP 2012003718**

(43) Date of publication of application:
**19.11.2014 Bulletin 2014/47**

(73) Proprietor: **Panasonic Corporation
Kadoma-shi, Osaka 571-8501 (JP)**

(72) Inventor: **KAWAJI, Mitsuo
Osaka 540-6207 (JP)**

(74) Representative: **Eisenführ Speiser
Patentanwälte Rechtsanwälte PartGmbB
Postfach 31 02 60
80102 München (DE)**

(56) References cited:
EP-A2- 1 657 808    WO-A1-2010/116815
JP-A- 2001 119 978    JP-A- 2009 065 758
JP-A- 2009 100 558    JP-A- 2009 177 934
JP-A- 2009 183 051    JP-A- 2011 010 430
JP-A- 2011 010 430    US-A1- 2008 116 842
US-A1- 2011 031 910    US-A1- 2011 057 591

- SILVERIO BOLOGNANI ET AL: "Online MTPA Control Strategy for DTC Synchronous-Reluctance-Motor Drives", IEEE TRANSACTIONS ON POWER ELECTRONICS, INSTITUTE OF ELECTRICAL AND ELECTRONICS ENGINEERS, USA, vol. 26, no. 1, 1 January 2011 (2011-01-01), pages 20-28, XP011340930, ISSN: 0885-8993, DOI: 10.1109/TPEL.2010.2050493
- WEINER C ET AL: "FLUX-LINKAGE CONTROL OF FULLY-PITCHED SWITCHED RELUCTANCE MOTORS", 8TH EUROPEAN CONFERENCE ON POWER ELECTRONICS AND APPLICATIONS. LAUSANNE, CH, SEPT. 7 - 9, 1999; [EPE . EUROPEAN CONFERENCE ON POWER ELECTRONICS AND APPLICATIONS], EPE ASSOCIATION, BRUSSELS, BE, vol. 8, 7 September 1999 (1999-09-07), pages 1-09, XP000878498, ISBN: 978-90-75815-04-7

**Description**

**Technical Field**

The present invention relates to inverter control devices having a rectification means, and a smoothing means structured to include a capacitor with a significantly-small capacitance, which is connected to an output terminal of the rectification means, such that an output voltage largely pulses at a frequency which is twice the frequency of an AC power supply. More particularly, the present invention relates to inverter control devices adapted to drive a motor, such as a brushless DC motor, at an arbitrary rotating speed.

**Background Art**

Ordinary inverter control devices for driving a motor are adapted to rectify an AC power supply, further to smoothen the DC electric power resulted from the rectification, through a smoothing capacitor, further to convert, through an inverter, the smoothened DC electric power into AC electric power with an arbitrary rotating speed and an arbitrary voltage and to supply the AC electric power to the motor.

Structures as described above have necessitated smoothing capacitors. These smoothing capacitors have caused increases of the sizes and the costs of conventional inverter control devices. However, it has been known that, if the smoothing capacitor is made unnecessary or made to have a largely-reduced capacitance, this causes the DC voltage resulted from the rectification to pulse in synchronization with the AC power supply, which exerts, on the motor, adverse influences such as increases of torque pulsations and reduction of the driving efficiency.

To cope therewith, in order to alleviate adverse influences on the motor due to pulsations of the DC voltage, in cases where the smoothing capacitor is made unnecessary or made to have a largely-reduced capacitance, there is a method which moves up the output timings of PWM signals for carrying forward the phase of the inverter output voltage, in saturation states where it is impossible to provide inverter output voltages according to commanded voltage values for the motor (refer to Patent Literature 1, for example).

The method in Patent Literature 1 is adapted to weaken a field magnetic flux in a motor for restricting the voltage applied to the motor, when the DC voltage applied to an inverter has been reduced due to pulsations thereof (which corresponds to so-called field weakening control).

However, the method in Patent Literature 1 necessitates flowing an armature electric current for weakening the field magnetic flux in the motor, which raises concerns about adverse influences, such as increases of the armature electric current and reduction of the motor driving efficiency.

Therefore, there has been suggested a method for suppressing the armature electric current in a motor to a minimum necessary value for alleviating reduction of the motor driving efficiency, wherein this method is adapted to control the electric current such that the total amount of magnetic fluxes in the motor is maintained constant, for causing a field weakening operation to be performed naturally, when the voltage applied to the motor is restricted, in an inverter control device which is structured to necessitate no smoothing capacitor or structured to include a capacitor with a largely-reduced capacitance (refer to Patent Literature 2, for example).

The method in Patent Literature 2 is adapted to integrate the voltage difference between the voltage applied to the motor and the voltage drop across a winding resistance in the motor (the winding resistance value × the electric current value) to calculate the total amount of magnetic fluxes in the motor (the vector composed of the magnetic flux generated from the stator and the magnetic flux generated from the rotor), further to perform proportional integral control based on the magnetic-flux difference between a commanded magnetic flux and the calculated total magnetic flux value, and to control electric current components (an orthogonal two-axis coordinate system) which contribute to the field weakening operation, according to the change of the voltage applied to the motor, such that the calculated total magnetic flux value has a constant value (the commanded magnetic flux).

Further, Patent Literature 2 describes gradually reducing the commanded magnetic flux with increasing rotating speed of the motor, thereby reducing the total amount of magnetic fluxes to be maintained constant, along therewith, in order to enhance the effect of the field weakening control in a higher-speed rotation range.

Further, Patent Literature 2 also describes about measures against the phenomenon in which, in the inverter control device, harmonic components in the input electric current are increased due to the occurrence of intervals during which the input electric current from the AC power supply is not conducted, due to regenerative energy from the motor. As such measures, there is suggested a method which reduces the commanded electric-current values for the components which contribute to the field weakening operation (the orthogonal two-axis coordinate system), at the phases coincident with the zero-crossing of the AC power supply voltage, for suppressing the electric current in the direction of regenerative operations around the zero-crossing of the AC power supply voltage and, further, there is suggested a method which employs, in an interior permanent magnet motor (IPM motor), a motor having such specifications as to alleviate the influence of the induced voltage generated by field magnets for increasing the ratio of the reluctance torque, wherein any of the methods suggests the effect of suppressing harmonic components in the input electric current through the reduction of the regenerative energy.

Furthermore, as another method for suppressing the armature electric current in the motor to a minimum necessary value for alleviating the reduction of the motor driving efficiency, Non-Patent Literature 1 suggests a method which uses a commanded electric-current value for "field weakening control", which is determined from a limit value of the voltage applied to a motor, and further uses a commanded electric-current value for "maximum torque control", which is determined from an electric-current phase which minimizes the amplitude of the armature electric current in the motor, out of electric-current vectors which generate the same torque. Non Patent Literature 1 suggests a method which makes a comparison among the induced voltages in the motor, which have been determined from the respective commanded electric-current values and, further, selects a commanded electric current value which generates a smaller induced voltage (the field weakening control or the maximum torque control) for performing electric current control, in order to alleviate the reduction of the motor driving efficiency, while realizing stable driving of the motor.

Document US2011/031910 A1 discloses an inverter control device configured to provide a maximum torque per ampere control and a field weakening control.

Patent documents US2011/057591, JP2011010430, WO2010/116815, US2008/116842, EP1657808 and JP2009100558, as well as non - patent documents SILVERIO BOLOGNANI ET AL: "Online MTPA Control Strategy for DTC Synchronous-Reluctance-Motor Drives",IEEE TRANSACTIONS ON POWER ELECTRONICS, INSTITUTE OF ELECTRICAL AND ELECTRONICS ENGINEERS, USA, vol. 26, no. 1, 1 January 2011 (2011-01-01) and WEINER C ET AL: "FLUX-LINKAGE CONTROL OF FULLY-PITCHED SWITCHED RELUCTANCE MOTORS",8TH EUROPEAN CONFERENCE ON POWER ELECTRONICS AND APPLICATIONS. LAUSANNE, CH, SEPT. 7 - 9, 1999; [EPE. EUROPEAN CONFERENCE ON POWER ELECTRONICS AND APPLICATIONS], EPE ASSOCIATION, BRUSSELS, BE, vol. 8, 7 September 1999 (1999-09-07) disclose related control methods.

### Citation List

### Patent Literatures

Patent Literature 1: Unexamined Japanese Patent Publication No. H10-150795
Patent Literature 2: Japanese Patent No. 4693904

### Non Patent Literature

Non Patent Literature 1: Tatsuya Nishihara, Shigeo Morimoto, and Masayuki Sanada, "Influences of Electrolytic-Capacitor-less-ness in IPMSM Speed Control System", 2009 National Convention of The Institute of Electrical Engineers of Japan, 4-067, P. 116-117 (Part 4)

### Summary of Invention

### Technical Problem

As described above, inverter control devices having conventional structures have been adapted to suppress the field weakening operations to a minimum necessary level for suppressing the armature electric current in the motor to a minimum necessary value for alleviating the reduction of the motor driving efficiency or have been adapted to control the electric current in the direction of regenerative operations or to employ a motor having such specifications as to alleviate the influences of the induced voltage generated by the field magnets for increasing the ratio of the reluctance torque, in order to reduce the regenerative energy from the motor for suppressing harmonic components in the input electric current from the AC power supply. However, these structures have had the problem that it is impossible to optimize the efficiency of the entire motor driving system including the inverter control device and the motor as an object to be controlled.

The present invention was made to overcome the aforementioned problem in inverter control devices having conventional structures and aims at utilizing a motor having a higher ratio of a reluctance torque in an inverter control device structured to include a capacitor with a small capacitance and, further, at controlling regenerative energy from the motor, in order to optimize the efficiency of the entire motor driving system.

**Solution to Problem**

In order to solve the problem of the conventional art, an inverter control device defined by independent apparatus claim 1 is proposed.

Preferred embodiments are defined in the independent claims.

The inverter control device having the aforementioned structure according to the present invention is adapted to control regenerative energy from the motor such that it is equal to or less than a predetermined value for optimizing the efficiency of "the converter (the rectification portion and the smoothing portion) and the inverter (the DC-AC conversion portion)", while suppressing the armature electric current in the motor to a minimum necessary value for alleviating the reduction of the motor efficiency. This can optimize the efficiency of the entire system.

Novel characteristics of the invention are nothing other than the matters described specifically in the appended claims, but the present invention, as well as other objects and characteristics thereof, will be better understood and evaluated, regarding both the structures and contents thereof, by reading the following detailed description in conjunction with the drawings.

**Advantageous Effects of Invention**

The inverter control device according to the present invention utilizes a motor having a higher ratio of a reluctance torque and, further, controls regenerative energy from the motor, thereby optimizing the efficiency of the entire motor driving system including the motor.

**Brief Description of Drawings**

Fig. 1 is a view of the system structure of an inverter control device according to a first embodiment of the present invention.

Fig. 2 is a view of the system structure of an inverter control device according to a second embodiment of the present invention.

Fig. 3 is a view of the system structure of an inverter control device according to a third embodiment of the present invention.

Fig. 4 is a view illustrating an example of temporal changes in the state of the phase electric currents in a motor.

Fig. 5 is a view illustrating an example of changes of PWM signals.

Fig. 6 is a view illustrating the states of electric currents flowing through the motor and a DC-AC conversion portion during driving with the PWM signals in Fig. 5.

Fig. 7 is a view illustrating an example of changes of PWM signals.

Fig. 8 is a view illustrating the states of electric currents flowing through the motor and a DC-AC conversion portion during driving with the PWM signals in Fig. 7.

Fig. 9(a) is a characteristic view of a first operation in the inverter control device according to the present invention, and Fig. 9(b) is a characteristic view of the first operation in the inverter control device.

Fig. 10(a) is a characteristic view of a second operation in the inverter control device according to the present invention, and Fig. 10(b) is a characteristic view of the second operation in the inverter control device.

Fig. 11 is a view of characteristics of a total amount of regenerative energy and a motor magnetic flux, in the inverter control device according to the present invention.

Fig. 12(a) is a view of characteristics of the total amount of regenerative energy and the efficiency of a converter (a rectification portion and a smoothing portion), in the inverter control device according to the present invention, Fig. 12 (b) is a view of characteristic of the total amount of regenerative energy and the efficiency of an inverter (the DC-AC conversion portion), and Fig. 12 (c) is a view of characteristic of the total amount of regenerative energy and the total efficiency.

Fig. 13 is a view of a characteristic of a motor output torque in the inverter control device according to the present invention.

Fig. 14 is a schematic view of a first processing flow in the inverter control device according to the present invention.

Fig. 15 is a schematic view of a second processing flow in the inverter control device according to the present invention.

Fig. 16 is a view of characteristics of the electric-current phase difference and the armature electric current, in the inverter control device according to the present invention.

**Description of Embodiments**

An inverter control device according to a first aspect of the present invention is for driving a motor adapted to utilize a magnet torque generated by a field magnetic flux and an armature electric current, and a reluctance torque generated by the armature electric current and an inductance change in an armature winding, in combination with each other so as to make the ratio of the reluctance torque higher, the inverter control device including:

a rectification portion to which an AC power supply is inputted;
a smoothing portion having a capacitor with a value set so that an output voltage from the rectification portion pulses at a frequency which is about twice an AC-power-supply frequency;
a DC-AC conversion portion adapted to convert a smoothened voltage from the smoothing portion into a desired AC voltage for driving the motor;
a driving control portion adapted to transmit, to the DC-AC conversion portion, information necessary for driving the motor according to the smoothened voltage; and
an electric-current detection portion adapted to detect the armature electric current in the motor;
wherein the driving control portion includes a magnetic-flux estimation portion adapted to estimate a flux linkage in the motor based on the armature electric current detected by the electric-current detection portion, and an electric-current phase-difference adjustment portion adapted to adjust a phase difference between the armature electric current and an induced voltage generated by the motor, and
the electric-current phase-difference adjustment portion is adapted to perform a phase adjustment, such that an estimated flux-linkage value estimated by the magnetic-flux estimation portion is equal to or less than a flux-linkage set value which has been preliminarily set and, also, at least one of an average value of an electric-current command value or a torque command value which is supplied to the motor, an average value of an effective value of the armature electric current detected by the electric-current detection portion, and an average value of a peak value of the armature electric current detected by the electric-current detection portion is minimized.

The inverter control device having this structure in the first aspect of the present invention is adapted to control the regenerative energy from the motor such that it is equal to or less than a predetermined value for optimizing the efficiency of "the converter (the rectification portion and the smoothing portion) and the inverter (the DC-AC conversion portion)", while suppressing the armature electric current in the motor to a minimum necessary value for alleviating the reduction of the motor efficiency. This can optimize the efficiency of the entire system.
In an inverter control device according to a second aspect of the present invention, the driving control means according to the first aspect further includes a regenerative-interval measuring portion adapted to measure an interval during which a regenerative electric current is flowed into the capacitor from the motor,
the electric-current phase-difference adjustment portion is adapted to perform a phase adjustment, such that an estimated flux-linkage value estimated by the magnetic-flux estimation portion is equal to or less than a flux-linkage set value which has been preliminarily set, also a measured regenerative-interval value measured by the regenerative-interval measuring portion is equal to or less than a regenerative-interval set value which has been preliminarily set and, also, at least one of an average value of an electric-current command value or a torque command value which is supplied to the motor, an average value of an effective value of the armature electric current detected by the electric-current detection means, and an average value of a peak value of the armature electric current detected by the electric-current detection portion is minimized.
The inverter control device having this structure in the second aspect of the present invention is adapted to control the regenerative energy from the motor and the intervals during which the regenerative electric current flows therefrom such that they are equal to or less than respective predetermined values for certainly suppressing the intervals during which the input electric current from the AC power supply is not conducted thereto to be equal to or less than a predetermined value and for optimizing the efficiency of "the converter (the rectification portion and the smoothing portion) and the inverter (the DC-AC conversion portion)", while suppressing the armature electric current in the motor to a minimum necessary value for alleviating the reduction of the motor efficiency. This can optimize the efficiency of the entire system.
In an inverter control device according to a third aspect of the present invention, the magnetic-flux estimation portion according to the first or second aspect is adapted to estimate the flux linkage in an orthogonal two-axis coordinate system, through a calculation, based on respective preliminarily-set factors of the motor, and the armature electric current detected by the electric-current detection portion.
With the inverter control device having this structure in the third aspect of the present invention, it is possible to calculate the flux linkage in the motor through calculations, which eliminates the necessity of provision of an additional sensor or the like, thereby offering an advantage in terms of the cost.
An inverter control device according to a fourth aspect of the present invention further includes

an AC-voltage detection portion adapted to detect a voltage from the AC power supply, an absolute-value conversion portion adapted to calculate the absolute value of the detected AC voltage value detected by the AC-voltage detection portion, and a smoothed-voltage detection portion adapted to detect the smoothened voltage,

wherein the regenerative-interval measuring portion is adapted to measure the interval during which the regenerative electric current is flowed into the capacitor from the motor, based on a magnitude relationship between the absolute value of the detected AC-voltage value resulted from the conversion by the absolute-value conversion portion and the detected smoothened-voltage value detected by the smoothened-voltage detection portion.

With the inverter control device having the structure in the fourth aspect of the present invention, it is possible to certainly measure the intervals during which the regenerative electric current is flowed into the capacitor from the motor, even in the event of voltage distortions in the AC power supply and/or fluctuations of the power supply frequency.

In an inverter control device according to fifth aspect of the present invention, the electric-current detection portion according to the second or third aspect is adapted to directly detect an electric current in a DC-side bus line to/from the DC-AC conversion portion and to indirectly detect the armature electric current flowing through the motor, from the detected value of the electric current in the bus line,

the regenerative-interval measuring portion is adapted to measure the interval during which the regenerative electric current is flowed into the capacitor from the motor, based on the detected value of the electric current in the bus line.

With the inverter control device having this structure in the fifth aspect of the present invention, it is possible to share the detection of the armature electric current flowing through the motor, which eliminates the necessity of provision of an additional sensor or the like, thereby offering an advantage in terms of the cost.

In the inverter control device according to a sixth aspect of the present invention, the inverter control device according to any one of the first, second, third, fifth aspects further includes a smoothened-voltage detection portion adapted to detect the smoothened voltage, wherein the electric-current phase-difference adjustment portion is adapted to perform a phase adjustment, only when the detected smoothened-voltage value detected by the smoothened-voltage detection portion is less than an arbitrary set value.

With the inverter control device having this structure in the sixth aspect of the present invention, it is possible to shorten the time required for processing with a microcomputer, a system LSI and the like.

In an inverter control device according to a seventh aspect, the inverter control device according to any one of the first, second, third, and fifth aspects further includes an AC-voltage detection portion adapted to detect a voltage from the AC power supply, and an absolute-value conversion portion adapted to calculate the absolute value of the detected AC voltage value detected by the AC-voltage detection portion,

the electric-current phase-difference adjustment portion is adapted to perform a phase adjustment, only when the absolute value of the detected AC-voltage value resulted from the conversion by the absolute-value conversion portion is less than an arbitrary set value.

With the inverter control device having this structure in the seventh aspect of the present invention, it is possible to shorten the time required for processing with a microcomputer, a system LSI and the like.

In an inverter control device according to an eighth aspect of the present invention, according to the fourth aspect, the electric-current phase-difference adjustment portion is adapted to perform a phase adjustment, only when at least one of the detected smoothened-voltage value detected by the smoothened-voltage detection portion, and the absolute value of the detected AC-voltage value resulted from the conversion by the absolute-value conversion portion is less than an arbitrary set value.

With the inverter control device having this structure in the eighth aspect of the present invention, it is possible to shorten the time required for processing with a microcomputer, a system LSI and the like.

In an inverter control device according to a ninth aspect of the present invention, according to any one of the first to eighth aspect, the smoothing portion comprises a capacitor and a reactor, and a resonance frequency determined by the capacitor and the reactor is set to be equal to or more than 40 times the AC-power-supply frequency.

With the inverter control device having this structure in the ninth aspect of the present invention, it is possible to realize higher performance regarding power-supply harmonic characteristics of the input electric current from the AC power supply.

In an inverter control device according to a tenth aspect of the present invention, according to any one of the first to ninth aspects, the flux-linkage set value is set to be equal to or less than 2.5 times the flux linkage of when the regenerative energy charged in the capacitor from the motor is zero.

With the inverter control device having this structure in the tenth aspect of the present invention, it is possible to control the regenerative energy from the motor such that it is certainly equal to or less than a predetermined value, thereby optimizing the efficiency of "the converter (the rectification portion and the smoothing portion) and the inverter (the DC-AC conversion portion)".

In an inverter control device according to a eleventh aspect, according to any one of the first to tenth aspects, a specification of the motor is determined, such that the flux linkage in the motor which is controlled by the driving control portion is equal to or less than 2.5 times the flux linkage of when the regenerative energy charged in the capacitor from the motor is zero, at a predetermined rotating speed and load torque.

With the inverter control device having this structure in the eleventh aspect of the present invention, it is possible to control the regenerative energy from the motor such that it is certainly equal to or less than a predetermined value, thereby optimizing the efficiency of "the converter (the rectification portion and the smoothing portion) and the inverter (the DC-AC conversion portion)".

Hereinafter, with reference to the accompanying drawings, embodiments of the inverter control device according to the present invention will be described.

(First Embodiment)

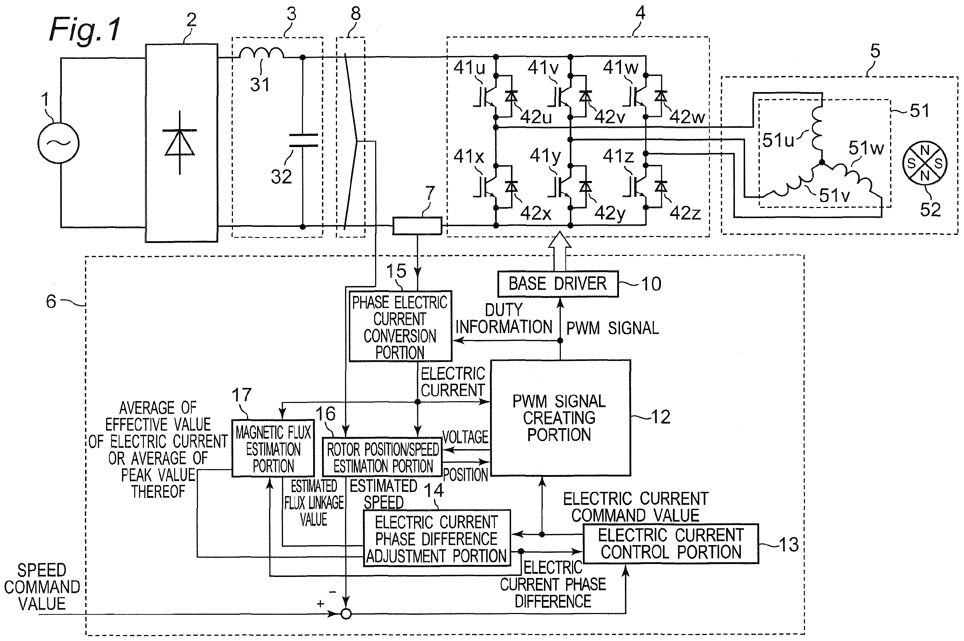

Fig. 1 is a view illustrating the system structure of an inverter control device according to a first embodiment of the present invention. The inverter control device according to the first embodiment includes a rectification portion 2 as a rectification means which is constituted by a diode bridge adapted to be supplied with electric power from an AC power supply 1 as a single-phase AC power supply, such as a commercial power supply, and, further, adapted to perform full-wave rectification on the AC power supply 1 supplied thereto, a smoothing portion 3 as a smoothing means which has a capacitor 32 with a value set in such a way that the output voltage from the rectification portion 2 largely pulses at a frequency which is about twice the power-supply frequency of the AC power supply 1, a DC-AC conversion portion 4 as a DC-AC conversion means which is adapted to convert the smoothened voltage from the smoothing portion 3 into an AC voltage having a desired frequency and a desired voltage value, and a driving control portion 6 as a driving control means which is adapted to transmit, to the DC-AC conversion portion 4, information necessary for driving a motor according to the smoothened voltage.

The motor 5 which is driven and controlled by the inverter control device is constituted by a stator 51 provided with three armature windings (51u, 51v, 51w) which are Y-connected to one another about a neutral point, and a rotor 52 provided with magnets. The motor 5 is adapted to utilize a magnet torque and a reluctance torque, in combination with each other, in such a way as to make the ratio of the reluctance torque higher, wherein the magnet torque is generated by a field magnetic flux generated from the magnets in the rotor 52 and the armature electric current flowing through the armature windings (51u, 51v, 51w) in the stator 51, while the reluctance torque is generated by the armature electric current and inductance changes in the armature windings (51u, 51v, 51w).

The DC-AC conversion portion 4 includes half-bridge circuits which are each constituted by a pair of switching devices, in association with the three phases, which are the U, V and W phases. The pair of switching devices in each half-bridge circuit are connected, in series, between the high-voltage-side end and the low-voltage-side end of the capacitor 32, and the smoothened voltage between the opposite ends of the capacitor 32 is applied to the half-bridge circuits. The half-bridge circuit for the U phase is constituted by a high-voltage-side switching device 41u, and a low-voltage-side switching device 41x. The half-bridge circuit for the V phase is constituted by a high-voltage-side switching device 41v, and a low-voltage-side switching device 41y. The half-bridge circuit for the W phase is constituted by a high-voltage-side switching device 41w, and a low-voltage-side switching device 41z. Further, respective freewheeling diodes (42u to 42z) are connected in parallel to these switching devices (41u to 41z). Namely, the upper arms are provided with the switching devices (41u, 41v, 41w) and the freewheeling diodes (42u, 42v, 42w), while the lower arms are provided with the switching devices (41x, 41y, 41z) and the freewheeling diodes (42x, 42y, 42z).

The smoothened voltage applied to the DC-AC conversion portion 4 is converted into a three-phase AC voltage through switching operations of the switching devices in the aforementioned DC-AC conversion portion 4, and the AC voltage resulted from this conversion is used for driving the motor 5. Further, in a DC-side bus line to/from the DC-AC conversion portion 4, there is provided an electric-current detection portion 7 as an electric-current detection means which is adapted to detect the bus-line electric current.

The smoothing portion 3 is adapted such that the LC resonance frequency is equal to or more than 40 times the power-supply frequency of the AC power supply 1. Further, the smoothing portion 3 includes a reactor 31 for reducing the peak value of the inrush charging/discharging electric current into the capacitor 32 with a smaller capacitance.

The driving control portion 6 can be constituted by a microcomputer and/or a system LSI, and the like and includes blocks which perform the respective functions of a base driver 10, a PWM signal creating portion 12, an electric-current control portion 13, an electric-current phase-difference adjustment portion 14, a phase-electric-current conversion portion 15, a rotor position/speed estimation portion 16, and a magnetic-flux estimation portion 17.

The phase-electric-current conversion portion 15 observes the electric current in the DC-side bus line to/from the DC-AC conversion portion 4, which flows through the electric-current detection portion 7, and, further, the phase-electric-current conversion portion 15 converts the bus-line electric current into an armature electric current in the motor 5. In actual, the phase-electric-current conversion portion 15 detects the electric current only during a predetermined time interval after converting the electric current in the DC-side bus line to/from the DC-AC conversion portion 4.

The rotor position/speed estimation portion 16 estimates the rotating speed of the motor 5 and the rotor magnetic-pole positions therein, from information about the armature electric current in the motor 5 which has been resulted from the conversion by the phase-electric-current conversion portion 15, an output voltage calculated by the PWM signal creating portion 12, and the smoothened voltage detected by a smoothened-voltage detection portion 8.

The electric-current control portion 13 derives an electric-current command value, through PI calculations and the like, such that the rotating speed of the motor 5 agrees with a speed command value, based on an electric-current phase difference supplied thereto from the electric-current phase-difference adjustment portion 14, and based on information about the deviation of the rotating speed of the motor 5 which has been estimated by the rotor position/speed estimation portion 16 from the speed command value supplied from the outside.

The PWM signal creating portion 12 creates PWM signals for driving the motor 5, from the electric-current command value derived by the electric-current control portion 13, the armature electric current in the motor 5 which has been resulted from the conversion by the phase-electric-current conversion portion 15, and information about the rotor magnetic-pole positions in the motor 5 which have been estimated by the rotor position/speed estimation portion 16.

The PWM signal creating portion 12 creates the PWM signals such that, for example, in a state where the smoothened voltage applied to the DC-AC conversion portion 4 is 200 V, when the U-phase commanded voltage is 150 V, the V-phase commanded voltage is 100 V, and the W-phase commanded voltage is 0 V, the duty of the PWM signal for each phase (the ratio of the time period during which the upper-arm switching device is ON to the carrier period of the PWM signal) is 75 % for the U phase, 50 % for the V phase, and 0 % for the W phase.

Namely, the division of the commanded voltage for each phase by the smoothened voltage results in the duty of the PWM signal. Further, when the commanded voltage for each phase is larger than the smoothed voltage, the duty of the PWM signal is 100%.

The PWM signals determined as described above are finally outputted to the base driver 10, and the respective switching devices (41u to 41z) are driven according to the PWM signals, thereby creating an AC electric current with a sinusoidal-wave shape. As described above, in the first embodiment, such a sinusoidal-wave-shaped armature electric current is flowed, thereby realizing sinusoidal-wave driving of the motor 5.

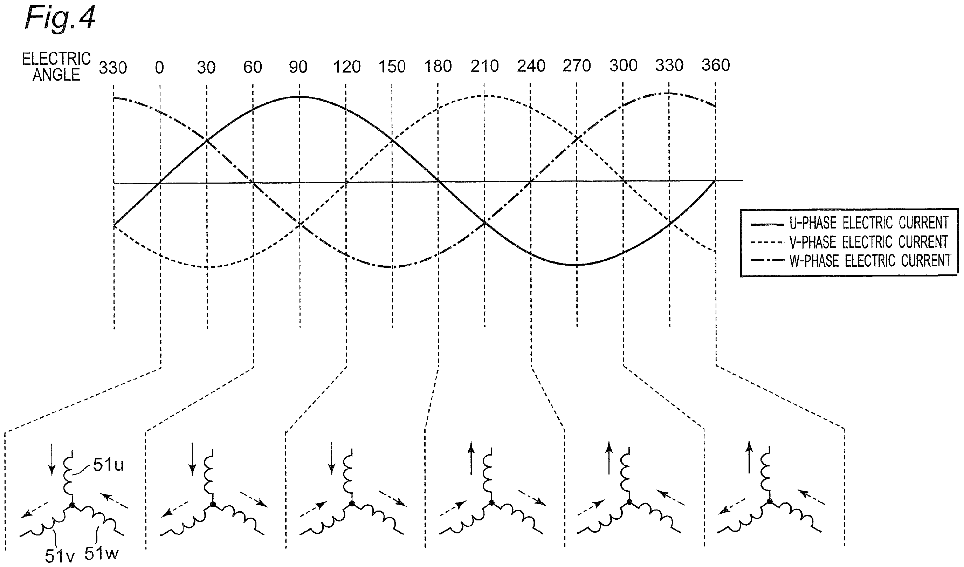

Next, with reference to Figs. 4 to 8, there will be described states where the armature electric current in the motor 5 appears, as the bus-line electric current flowing through the DC-side bus line to/from the DC-AC conversion portion 4.

Fig. 4 is a view illustrating states of the armature electric current flowing through the armature windings in the motor 5, and the directions of the electric currents flowing through the armature windings for the respective phases, within respective sections at 60-degree-electric-angle intervals.

Referring to Fig. 4, within the section corresponding to the electric-angle range of 0 to 60 degrees, electric currents flow through the U-phase winding 51u and the W-phase winding 51w from their respective non-connected ends toward the neutral point, while an electric current flows through the V-phase winding 51v from the neutral point to its non-connected end. Further, within the section corresponding to the electric-angle range of 60 to 120 degrees, an electric current flows through the U-phase winding 51u from its non-connected end toward the neutral point, while electric currents flow through the V-phase winding 51v and the W-phase winding 51w from the neutral point toward their respective non-connected ends. Thereafter, there are illustrated the states of the changes of the phase electric currents flowing through the windings for the respective phases, at 60-degree-electric-angle intervals.

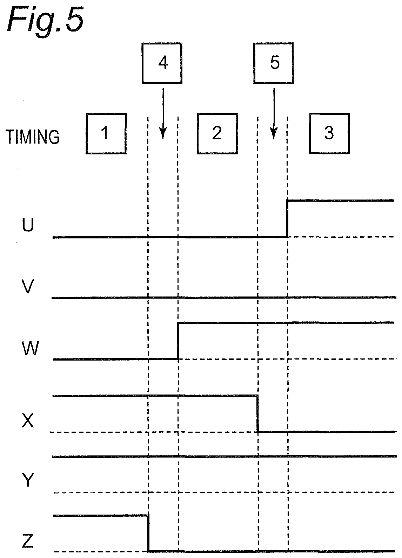

For example, there will be studied a case where the PWM signals created by the PWM signal creating portion 12, correspondingly to half the carrier period, are changed as in Fig. 5, at an electric angle of 30 degrees in Fig. 4.

In this case, in Fig. 5, a signal U indicates a signal for driving the switching device 41u, a signal V indicates a signal for driving the switching device 41v, a signal W indicates a signal for driving the switching device 41w, a signal X indicates a signal for driving the switching device 41x, a signal Y indicates a signal for driving the switching device 41y, and a signal Z indicates a signal for driving the switching device 41z.

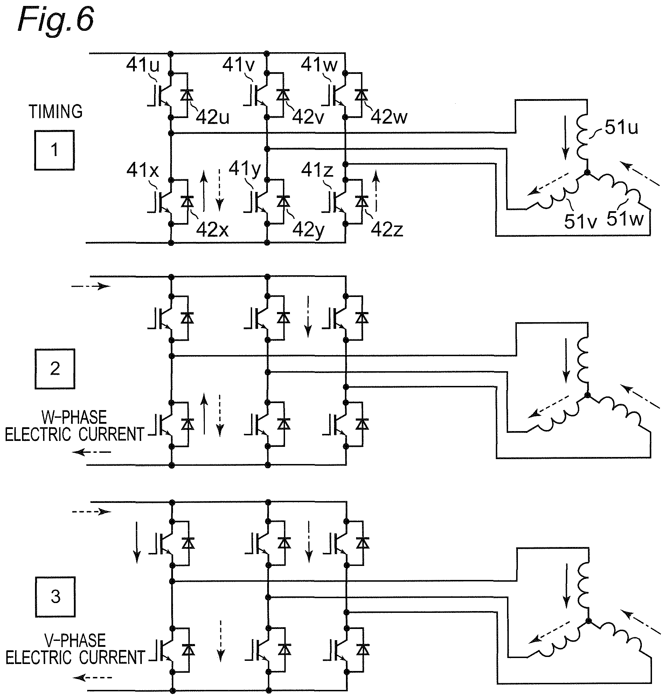

These signals are illustrated in an active-high manner. In this case, as illustrated in Fig. 6, at timing 1, no electric current appears in the DC-side bus line to/from the DC-AC conversion portion 4. At timing 2, the armature electric current flowing through the W-phase winding 51w (the W-phase electric current) appears therein. At timing 3, the armature electric current flowing through the V-phase winding 51v (the V-phase electric current) appears therein.

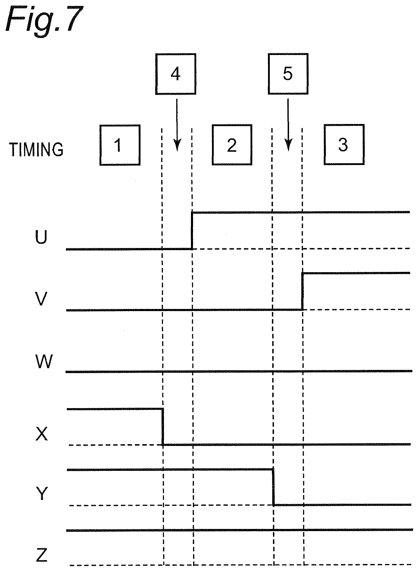

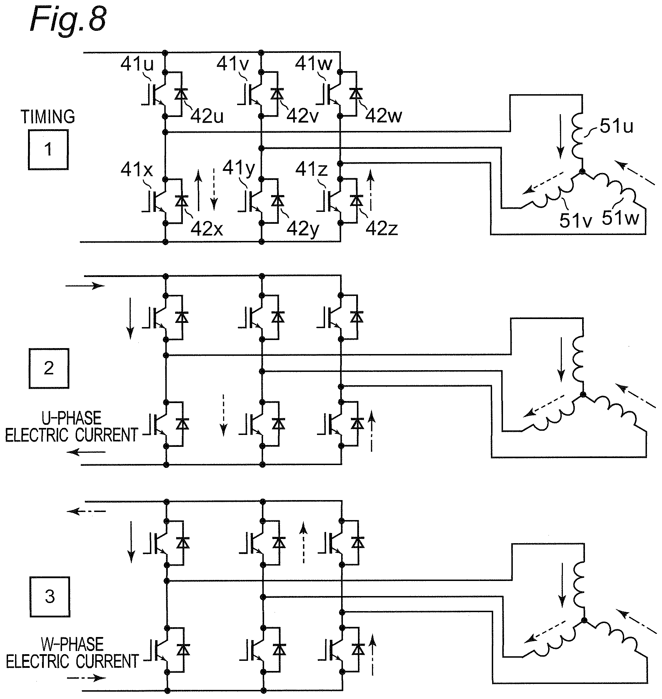

As another example, there will be studied a case where the PWM signals created by the PWM signal creating portion 12, correspondingly to half the carrier period, are changed as in Fig. 7, at an electric angle of 30 degrees in Fig. 4. In this case, as illustrated in Fig. 8, at timing 1, no electric current appears in the DC-side bus line to/from the DC-AC conversion portion 4. At timing 2, the armature electric current flowing through the U-phase winding 51u (the U-phase electric current) appears therein. At timing 3, the armature electric current flowing through the W-phase winding 51w (the W-phase electric current) appears therein.

In this case, at the timing 3 in Fig. 8, the electric current in the DC-side bus line to/from the DC-AC conversion portion 4 is directed to flow from the low-voltage-side end of the capacitor 32 to the high-voltage-side end of the capacitor 32 through the DC-AC conversion portion 4, and there is illustrated a regenerative state where electric energy generated by the motor 5 is returned to the capacitor 32 (hereinafter, this electric energy will be referred to as regenerative energy).

It can be seen that a phase electric current in the motor 5 appears in the bus line to/from the DC-AC conversion portion 4, correspondingly to the ON/OFF states of the switching devices (41u to 41z), as described above.

More specifically, there is a relationship as follows. That is, in states where any one of the upper-arm switching devices (41u, 41v, 41w) is being ON, the armature electric current in the phase being ON appears in the bus line to/from the DC-AC conversion portion 4. Also, in states where any one of the lower-arm switching devices (41x, 41y, 41z) is being ON, the armature electric current in the phase being ON appears in the bus line to/from the DC-AC conversion portion 4.

It is obvious that, if it is possible to determine the electric currents in two phases at timings close to each other within the carrier period as described above, it is possible to determine the armature electric currents (iu, iv, iw) for the respective phases, according to the relationship expressed by the following Equation 1.

[Numeral 1]

$$ i u + i v + i w = 0 \qquad (1) $$

Further, the timings 4 and 5 are dead-time intervals for preventing short-circuits among the upper and lower arms in the DC-AC conversion portion 4, due to delays of operations of the switching devices (41u to 41z). Within these dead-time intervals, the electric current in the bus line to/from the DC-AC conversion portion 4 is inconstant, depending on the directions of the flows of the armature electric currents for the respective phases.

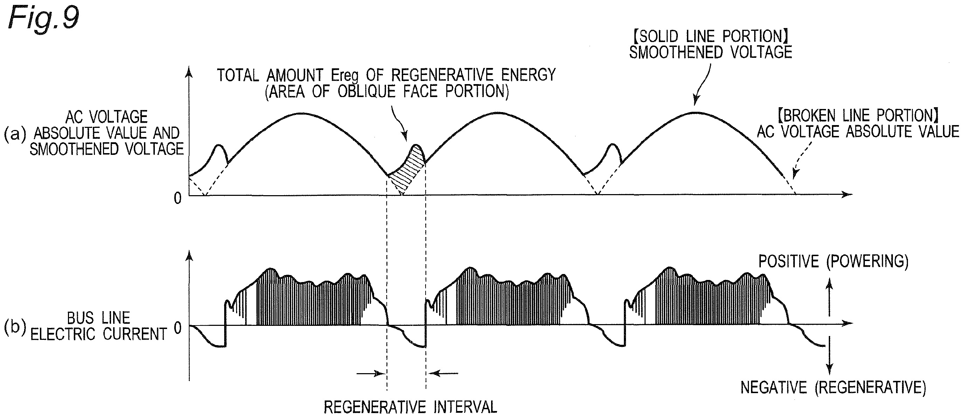

Fig. 9 is a characteristic view of a first operation of the inverter control device according to the first embodiment of the present invention. Fig. 9(a) illustrates the absolute value of the AC voltage of the AC power supply 1 (a broken-line portion in Fig. 9(a)), and the smoothened voltage applied to the DC-AC conversion portion 4 (a solid-line portion in Fig. 9(a)). Further, Fig. 9(b) illustrates the waveform of the electric current in the DC-side bus line to/from the DC-AC conversion portion 4, which flows through the electric-current detection portion 7.

The inverter control device according to the first embodiment of the present invention employs the capacitor 32 having a significantly-small capacitance. Therefore, when an electric current flows through the motor 5, the smoothened voltage applied to the DC-AC conversion portion 4 largely pulses at a frequency which is about twice the power-supply frequency fs of the AC power supply 1.

Fig. 9(b) represents the waveform of the electric current in the DC-side bus line to/from the DC-AC conversion portion 4, which flows through the electric-current detection portion 7, assuming that the direction of the flow from the DC-AC conversion portion 4 to the low-voltage-side end of the capacitor 32 is positive and, on the contrary, the direction of the flow from the low-voltage-side end of the capacitor 32 to the DC-AC conversion portion 4 is negative. As illustrated in Fig. 9(b), the bus-line electric current has a pulse-shaped waveform corresponding to the operations of the respective switching devices (41u to 41z) in the DC-AC conversion portion 4.

As illustrated in Fig. 9, the inverter control device structured to include the capacitor 32 having a smaller capacitance may induce intervals (hereinafter, referred to as regenerative intervals) during which the electric current in the DC-side bus line to/from the DC-AC conversion portion 4 is negative, around the zero-crossing of the power-supply voltage of the AC power supply 1, wherein, during these regenerative intervals, the regenerative energy from the motor 5 is charged in the capacitor 32.

The total amount Ereg of regenerative energy charged in the capacitor 32 can be determined, by integrating the difference between the smoothened voltage Vdc applied to the DC-AC conversion portion 4 and the absolute value |Vac| of the AC voltage of the AC power supply 1, as in the following Equation 2. Namely, the total amount Ereg of the regenerative energy corresponds to the area of the oblique-line portion in Fig. 9(a).

[Numeral 2]

$$ E r e g = \int (V d c - | V a c |) d t \qquad (2) $$

The total amount Ereg of regenerative energy largely relates to the specifications of the motor 5, the load conditions of the motor 5 (the rotating speed, the load torque, the ambient temperature and the like) and the like, as well as to the AC voltage value of the AC power supply 1, the reactor 31 in the smoothing portion 3, and the capacitance of the capacitor 32. Particularly, the present inventors have focused attention to the fact that the flux linkage (the d-axis flux linkage) which contributes to the induced voltage generated by the motor 5, and the flux linkage (the primary flux linkage) which contributes to the applied voltage necessary for driving the motor 5 relate to the total amount Ereg of regenerative energy.

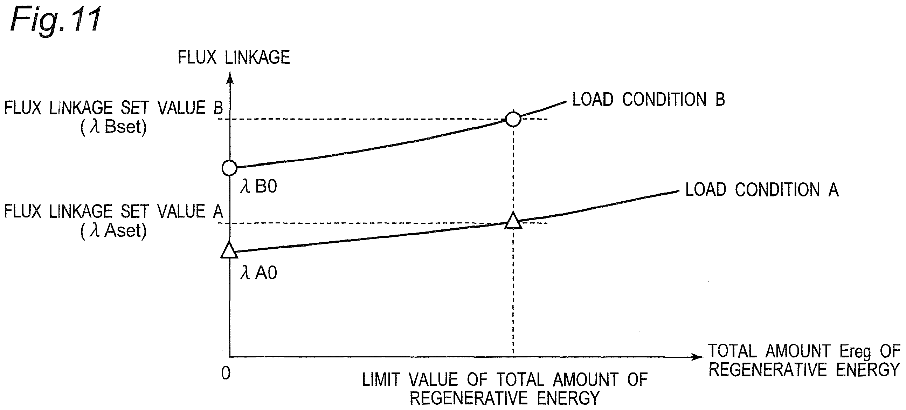

Fig. 11 is a view illustrating characteristics of the total amount Ereg of regenerative energy, and the flux linkage (the d-axis flux linkage / the primary flux linkage) in the motor 5 which is controlled by the driving control portion 6, under different two load conditions (A and B). As illustrated in Fig. 11, the total amount Ereg of regenerative energy increases as the flux linkage (the d-axis flux linkage / the primary flux linkage) in the motor 5 increases and, thus, there is a monotonous-increasing relationship therebetween.

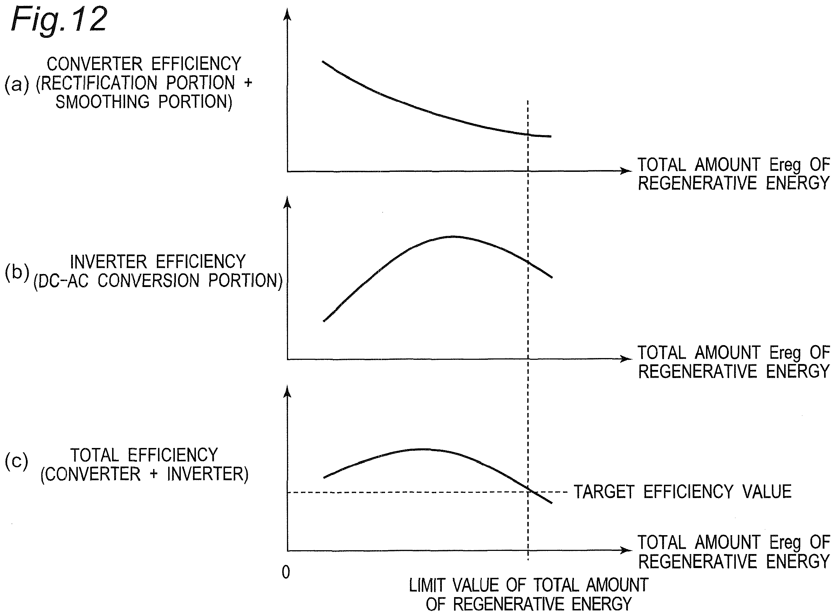

Further, Fig. 12(a) is a view illustrating a characteristic of the efficiency of the converter (the rectification portion 2 and the smoothing portion 3) with respect to the total amount Ereg of regenerative energy, Fig. 12(b) is a view illustrating a characteristic of the efficiency of the inverter (the DC-AC conversion portion 4), and Fig. 12(c) is a view illustrating a characteristic of the total efficiency (the converter and the inverter) with respect to the total amount Ereg of regenerative energy. As illustrated in Fig. 12(c), if the total amount Ereg of regenerative energy excessively increases, this reduces the total efficiency of the converter (the rectification portion 2 and the smoothing portion 3) and the inverter (the DC-AC conversion portion 4). Therefore, the inverter control device according to the first embodiment of the present invention is adapted to provide a limit value of the total amount Ereg of regenerative energy for controlling the total amount Ereg of regenerative energy from the motor 5 to make it equal to or less than the limit value, in order to realize a total efficiency with a minimum necessary value (a preliminarily-set target efficiency value).

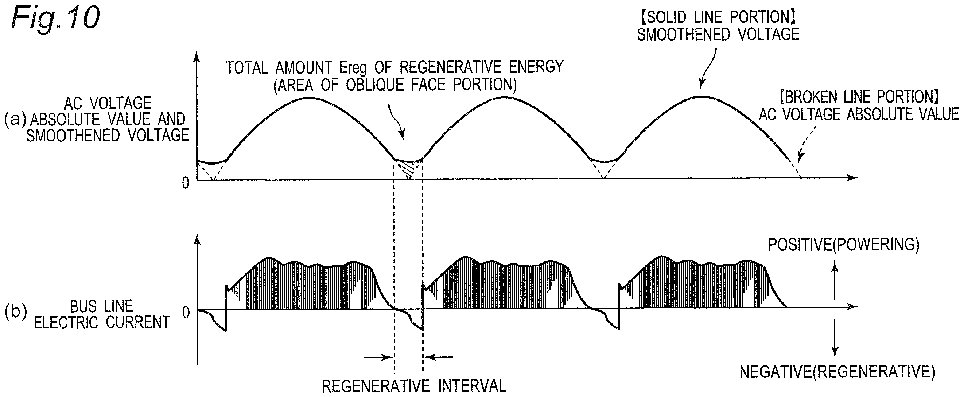

With reference to Fig. 10, there will be described an example of operations of when the total amount Ereg of regenerative energy is controlled to be equal to or less than the limit value. Fig. 10 is a characteristic view of a second operation of the inverter control device according to the first embodiment of the present invention, illustrating the absolute value of the AC voltage of the AC power supply 1 (a broken-line portion in Fig. 10(a)), the smoothened voltage applied to the DC-AC conversion portion 4 (a solid-line portion in Fig. 10(a)), and the waveform of the electric current in the DC-side bus line to/from the DC-AC conversion portion 4 (Fig. 10(b)), which flows through the electric-current detection portion 7, similarly to Fig. 9. Referring to Fig. 10, not only the total amount Ereg of regenerative energy but also the regenerative intervals are reduced, in comparison with those in Fig. 9. This results in reduction of the reactive electric power caused by the regenerative energy charged in the capacitor 32 from the motor 5.

In order to indirectly detect the total amount of Ereg of regenerative energy, in view of the monotonously-increasing relationship in Fig. 11, a method for estimating the flux linkage (the d-axis flux linkage / the primary flux linkage) in the motor 5 controlled by the driving control portion 6 is employed, and there is provided a flux-linkage set value (d-axis flux-linkage set value / primary flux-linkage set value) for the motor 5, which corresponds to the limit value of the total amount Ereg of regenerative energy.

Further, since the flux linkage in the motor 5 also depends on the load conditions (the rotating speed, the load torque, the ambient temperature and the like), as illustrated in Fig. 11, a plurality of flux-linkage set values should be preliminarily provided in the form of table data in association with respective rotating speeds, for example, in view of results of real-machine tests, results of simulation analyses, and the like. Referring to Fig. 11, there are provided respective flux-linkage set values ($\lambda$Aset, $\lambda$Bset), for different two load conditions (A and B).

Further, each flux-linkage set value (d-axis flux-linkage set value / primary flux-linkage set value) is preferably set to be equal to or less than 2.5 times the flux linkage of when the regenerative energy charged in the capacitor 32 from the motor 5 is zero, in view of results of real-machine tests, results of simulation analyses and the like. For example, in the case of the load condition A in Fig. 11, assuming that the flux linkage is $\lambda$A0 when the regenerative energy from the motor 5 is zero, the flux-linkage set value $\lambda$Aset should be set in such a way as to satisfy the condition of the following Equation 3.

[Numeral 3]

$$\lambda A s e t \leqq 2 . 5 \times \lambda A 0 \tag{3}$$

Therefore, in the inverter control device according to the first embodiment of the present invention, the magnetic-flux estimation portion 17 estimates the flux linkage in the motor 5 and, further, the electric-current phase-difference adjustment portion 14 performs a phase adjustment on the phase difference between the electric current and the induced voltage generated by the motor 5, such that the estimated flux-linkage value is equal to or less than the flux-linkage set value which has been preliminarily set and, also, at least one of the average value of the electric-current command value supplied to the motor 5 from the electric-current control portion 13, the average value of the effective value of the armature electric current resulted from the conversion by the phase-electric-current conversion portion 15 and the average value of the peak value of the armature electric current is minimized.

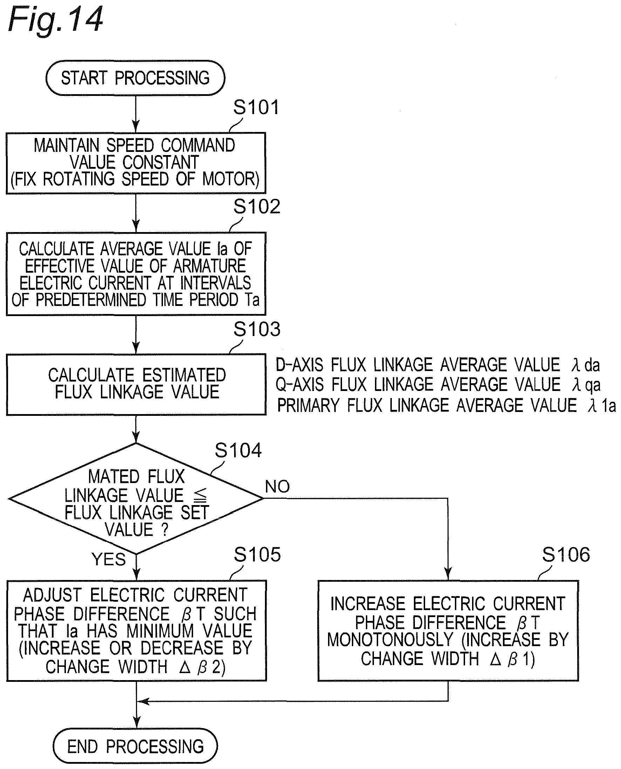

Hereinafter, with reference to Fig. 14, the magnetic-flux estimation portion 17 and the electric-current phase-difference adjustment portion 14, which are characteristics in the inverter control device according to the first embodiment of the present invention, will be described, in detail, regarding operations thereof.

Fig. 14 is a view illustrating the general outline of a first processing flow in the inverter control device according to the first embodiment, wherein the inverter control device according to the first embodiment employs the capacitor 32 having a significantly-smaller capacitance in the smoothing portion 3, which causes the armature electric current in the motor 5 to largely pulse. Therefore, prior to the estimation of the flux linkage in the motor 5 by the magnetic-flux estimation portion 17, the motor 5 is fixed at a predetermined rotating speed, such as one of the plurality of rotating speeds in the aforementioned table data, for example, while the speed command value provided from the outside is maintained constant (S101).

Next, the magnetic-flux estimation portion 17 calculates the average value la of the effective value of the armature electric current resulted from the conversion by the phase-electric-current conversion portion 15, at intervals of a predetermined time period Ta which has been preliminarily set, at first, according to the following Equation 4 (S102).

[Numeral 4]

$$I a = \Sigma \{\sqrt{(id\char`\^2 + iq\char`\^2)} / \sqrt{(3)} \times \Delta T\} / T a \tag{4}$$

In this case, "id" is the detected d-axis electric-current value, "iq" is the detected q-axis electric-current value, "id 2" is the square of "id", and "iq 2" is the square of "iq". The armature electric current has been obtained by performing a coordinate transformation from the three-phase AC coordinate system (iu, iv, iw) to a rotating coordinate system (id, iq).

Further, it is preferable that the predetermined time period Ta is set to be an integer multiple of the variation period of the smoothened voltage.

The flux linkage in the orthogonal two-axis coordinate system is calculated, based on the average value la of the effective value of the armature electric current which has been calculated as described above, and based on the respective preliminarily-set factors of the motor 5 (the d-axis inductance Ld, the q-axis inductance Lq, and the electromotive force coefficient A) (S103).

[Numeral 5]

$$\lambda d a = \Lambda + L d \times i d a \tag{5}$$

[Numeral 6]

$$\lambda q a = L q \times i q a \tag{6}$$

[Numeral 7]

$$\lambda 1 a = \sqrt{(\lambda d a \char`\^2 + \lambda q a \char`\^2)} \tag{7}$$

[Numeral 8]

$$i d a = -\sqrt{(3)} \times I a \times s i n (\beta T) \tag{8}$$

[Numeral 9]

$$i q a = \sqrt{(3)} \times I a \times c o s (\beta T) \tag{9}$$

In this case, "ida" is the d-axis electric-current average value, "iqa" is the q-axis electric-current average value, "βT" is the electric-current phase-difference set value, "λda" is the d-axis flux-linkage average value, "λqa" is the q-axis flux-linkage average value, "λda 2" is the square of "λda", "λqa 2" is the square of "λqa", and "λ1a" is the primary flux-linkage average value.

As described above, the magnetic-flux estimation portion 17 is enabled to calculate the flux linkage in the motor 5 through the calculations according to Equations 4 to 9, which eliminates the necessity of provision of an additional sensor or the like for detecting the flux linkage, thereby offering an advantage in terms of the cost.

Further, in cases where sufficient control performance can be ensured with only the d-axis flux-linkage average value λda, it is also possible to eliminate the processes for calculating the q-axis flux-linkage average value λqa, the primary flux linkage average value λ1a, and the like, for the sake of reduction of the time required for processing with the microcomputer, the system LSI and the like, or for other sakes.

Next, the electric-current phase-difference adjustment portion 14 determines whether or not the estimated flux-linkage value (the d-axis flux-linkage average value λda / the primary flux-linkage average value λ1a) which has been estimated by the magnetic-flux estimation portion 17 is equal to or less than the preliminarily-set flux-linkage set value (d-axis flux-linkage set value / primary flux-linkage set value), at first (S104). If the estimated flux-linkage value is larger than the flux-linkage set value, the electric-current phase difference βT is monotonously increased in steps of a predetermined change width Δβ1 for performing field weakening operations, until the estimated flux-linkage value (the d-axis flux-linkage average value λda / the primary flux-linkage average value λ1a) gets to be equal to or less than the flux-linkage set value (d-axis flux-linkage set value / primary flux-linkage set value) (S106). In the aforementioned way, the total amount Ereg of the regenerative energy from the motor 5 can be controlled to be equal to or less than the predetermined limit value.

Next, after the estimated flux-linkage value (the d-axis flux-linkage average value λda / the primary flux-linkage average value λ1a) has gotten to be equal to or less than the flux-linkage set value (d-axis flux-linkage set value / primary flux-linkage set value), the electric-current phase-difference adjustment portion 14 operates to change the electric-current phase difference βT by a predetermined change width Δβ2 (which is a change width smaller than Δβ1) and, further, to adjust the electric-current phase difference βT in such a way as to minimize the value of la, based on the difference in the average value la of the effective value of the armature electric current (which has been calculated according to Equation 4) between before and after the change of the electric-current phase difference βT (S105).

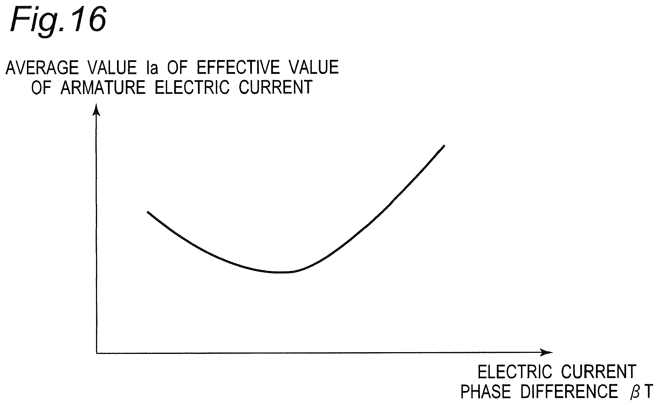

More specifically, as illustrated in Fig. 16, the average value la of the effective value of the armature electric current changes with respect to the electric-current phase difference βT along a quadratic function having a minimum value. Therefore, at first, the electric-current phase difference βT is increased by an amount Δβ2 of change. Further, if, after the change of the electric-current phase difference βT, the average value la has changed in the direction of decreasing from that before the change of the electric-current phase difference βT, the electric-current phase difference βT is further increased by Δβ2. On the contrary, if, after the change of the electric-current phase difference βT, the average value la has changed in the direction of increasing from that before the change of the electric-current phase difference βT is decreased by Δβ2. By adjusting the electric-current phase difference βT such that the direction of the change of the average value la is changed to the direction of increasing from the direction of decreasing, when the electric-current phase difference βT is changed, as described above, it is possible to search for the value thereof which minimizes the average value la and, thus, it is possible to minimize the average value la.

As described above, the regenerative energy from the motor 5 is controlled to be equal to or less than a predetermined value for optimizing the efficiency of "the converter (the rectification portion and the smoothing portion) and the inverter (the DC-AC conversion portion)" (realizing a total efficiency with a minimum necessary value (a preliminarily-set target efficiency value)), while the armature electric current in the motor 5 is suppressed to a minimum necessary value for alleviating the reduction of the motor efficiency. This can optimize the efficiency of the entire system.

Further, although, in the aforementioned description, the magnetic-flux estimation portion 17 calculates the estimated flux-linkage value, using the average value la of the effective value of the armature electric current resulted from the conversion by the phase electric-current conversion portion 15, it is also possible to use the average value Ipa of the peak value of the armature electric current resulted from the conversion by the phase electric-current conversion portion 15, as in the following Equation 4a.

[Numeral 10]

$$\mathrm{I}\,\mathrm{p}\,\mathrm{a} = \Sigma\ \{\sqrt{}\ (\mathrm{i}\,\mathrm{d}\,\hat{}\,2 + \mathrm{i}\,\mathrm{q}\,\hat{}\,2)\ \times\sqrt{}\ (2\diagup 3)\ \times\Delta\,\mathrm{T}\}\ \diagup\mathrm{T}\,\mathrm{a}$$

(4a)

In this case, the d-axis electric-current average value "ida", and the q-axis electric-current average value "iqa" can be calculated according to the following Equations 8a and 9a, and the estimated flux-linkage value can be calculated through the calculations according to the aforementioned Equations 5 to 7.

[Numeral 11]

$$\mathrm{i}\,\mathrm{d}\,\mathrm{a} = -\sqrt{}\ (3\diagup 2)\ \times\mathrm{I}\,\mathrm{p}\,\mathrm{a}\times\mathrm{s}\,\mathrm{i}\,\mathrm{n}\ (\beta\,\mathrm{T})$$ (8a)

[Numeral 12]

$$i q a = \sqrt{(3/2)} \times I p a \times cos (\beta T) \tag{9a}$$

Further, the electric-current phase-difference adjustment portion 14 is adapted to adjust the electric-current phase difference βT such that the average value la has a minimum value, based on the difference in the average value la of the effective value of the armature electric current between before and after the change of the electric-current phase difference βT, as in Equation 4b. However, in the case where the magnetic-flux estimation portion 17 uses the average value Ipa of the peak value of the armature electric current, it is also possible to adjust the electric-current phase difference βT, using the average value Ipa of the peak value of the armature electric current, instead of the average value la of the effective value of the armature electric current, such that this average value Ipa has a minimum value.

Further, as another method, the magnetic-flux estimation portion 17 can use the average value la* of the electric-current command value set by the electric-current control portion 13 (which corresponds to the average value of the effective value of the armature electric current), as expressed by the following Equation 4b.

[Numeral 13]

$$I a * = \Sigma \{ \sqrt{(i d *{}^{\wedge} 2 + i q *{}^{\wedge} 2)} / \sqrt{(3)} \times \Delta T \} / T a \tag{4b}$$

In this case, "id*" is the d-axis electric-current command value, "iq*" is the q-axis electric-current command value, "id*-2" is the square of "id*", and "iq* 2" is the square of "iq*". In this case, the estimated flux-linkage value can be calculated, using the average value la* of the electric-current command value, instead of the average value la in Equations 8 and 9.

Further, the electric-current phase-difference adjustment portion 14 is adapted to adjust the electric-current phase difference βT such that the average value la has a minimum value, based on the difference in the average value la of the effective value of the armature electric current between before and after the change of the electric-current phase difference βT. However, in the case where the magnetic-flux estimation portion 17 uses the average value la* of the electric-current command value, it is also possible to adjust the electric-current phase difference βT using the average value la* of the electric-current command value, instead of the average value la of the effective value of the armature electric current, such that this average value la* has a minimum value.

Hereinafter, there will be described, in detail, a method for determining the specifications of the reactor 31 having a smaller capacity and the capacitor 32 having a smaller capacity, regarding the inverter control device according to the first embodiment of the present invention.

In the inverter control device according to the first embodiment, the combination of the reactor 31 and the capacitance 32 is determined, in such a way as to make the resonance frequency fLC of the reactor 31 and the capacitor 32 equal to or more than 40 times the power supply frequency fs (in such a way as to satisfy the constraint of fLC≥(40×fs)), in order to suppress harmonic components in the input electric current from the AC power supply 1 for clearing the IEC standard.

In this case, assuming that the capacity of the reactor is L1 [H] and the capacity of the capacitor 32 is C1 [F], the resonance frequency fLC is expressed as in the following Equation 10.

[Numeral 14]

$$f L C = 1 / \{ 2 \pi \times \sqrt{(L 1 \times C 1)} \} \tag{10}$$

For example, assuming that the power-supply frequency is 50 Hz, and the capacity of the capacitor 32 is 10 μF, the capacity of the reactor 31 should be selected within the range of L1≤0.633 [mH], according to the aforementioned constraint and Equation 14.

By determining the combination of the reactor 31 having the smaller capacity and the capacitor 32 having the smaller capacity as described above, it is possible to realize higher performance regarding power-supply harmonic characteristics of the input electric current from the AC power supply 1.

Hereinafter, there will be described, in detail, a method for determining the specifications of the motor 5, regarding the inverter control device according to the first embodiment of the present invention.

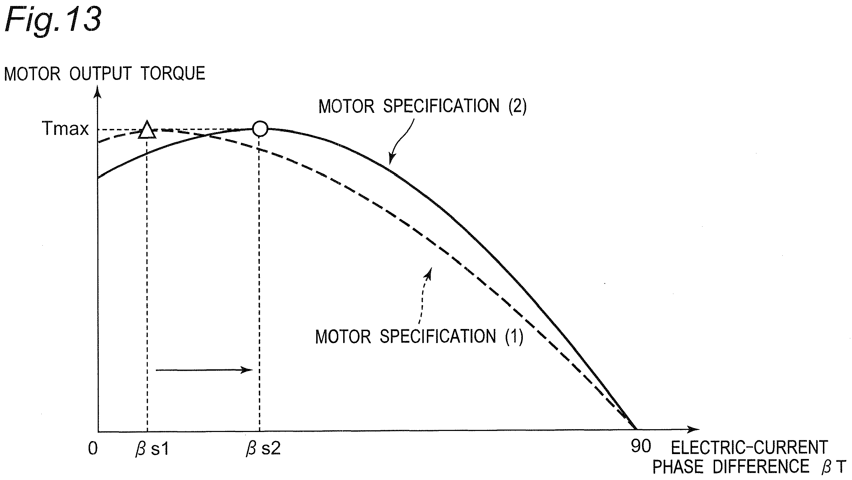

The motor 5 in the inverter control device according to the first embodiment is adapted to utilize a magnet torque and a reluctance torque, in combination with each other, in such a way as to make the ratio of the reluctance torque higher, wherein the magnet torque is generated by a field magnetic flux generated from the magnets in the rotor 52 and the armature electric current flowing through the armature windings (51u, 51v, 51w) in the stator 51, while the reluctance torque is generated by the armature electric current and inductance changes in the armature windings (51u, 51v, 51w). There will be described differences thereof from conventional motor specifications which mainly utilize magnet torques, with reference to Fig. 13.

Fig. 13 is a view illustrating characteristics of the motor output torques (the synthetic torque composed of the magnet torque and the reluctance torque) which are provided by a conventional motor specification (1) which mainly utilizes a magnet torque (1), and a motor specification (2) which has a higher ratio of the reluctance torque regarding the inverter control device according to the first embodiment. In Fig. 13, a broken line represents a characteristic curve of the conventional motor specification (1) which mainly utilizes the magnet torque, while a solid line represents a characteristic curve of the motor specification (2) having the higher ratio of the reluctance torque. Regarding the characteristic curves illustrated in Fig. 13, the motor specifications are determined, such that their maximum output torques Tmax are equal to each other and, also, when the maximum output torque Tmax can be obtained, the electric-current phase difference $\beta T$ for the motor specification (1) is $\beta s1$ while the electric-current phase difference $\beta T$ for the motor specification (2) is $\beta s2$, which is larger than $\beta s1$, under conditions where the average value Ia of the effective value of the armature electric current is the same. Further, $\beta s2$ can have the range of $\beta s1 < \beta s2 \leq 45$ [deg].

As described above, the magnetic-flux estimation portion 17 and the electric-current phase-difference adjustment portion 14 are adapted to estimate the flux linkage in the motor 5 to indirectly detect the total amount Ereg of regenerative energy from the motor 5 and, further, are adapted to adjust the electric-current phase difference $\beta T$ such that the estimated flux-linkage value is equal to or less than a preliminarily-set flux linkage, thereby controlling the total amount Ereg of regenerative energy such that it is equal to or less than the limit value. However, by determining the specifications of the motor 5 in the following manner, it is possible to control the total amount Ereg of regenerative energy such that it is certainly equal to or less than the limit value.

More specifically, the motor specification are determined such that, at a predetermined rotating speed and a predetermined load torque, the actual flux linkage (the d-axis flux linkage / the primary flux linkage) in the motor controlled by the driving control portion 6 is equal to or less than 2.5 times the flux linkage of when the regenerative energy charged in the capacitor 32 from the motor is zero (the respective factors of the motor which relate to the flux linkage are the d-axis inductance Ld, the q-axis inductance Lq, and the electromotive force coefficient A).

As described above, the inverter control device according to the first embodiment of the present invention is adapted to certainly suppress the regenerative energy from the motor to be equal to or less than a predetermined value, thereby certainly attaining optimization of the efficiency of "the converter (the rectification portion and the smoothing portion) and the inverter (the DC-AC conversion portion)" (realization of a total efficiency with a minimum necessary value (a preliminarily-set target efficiency value)).

(Second Embodiment)

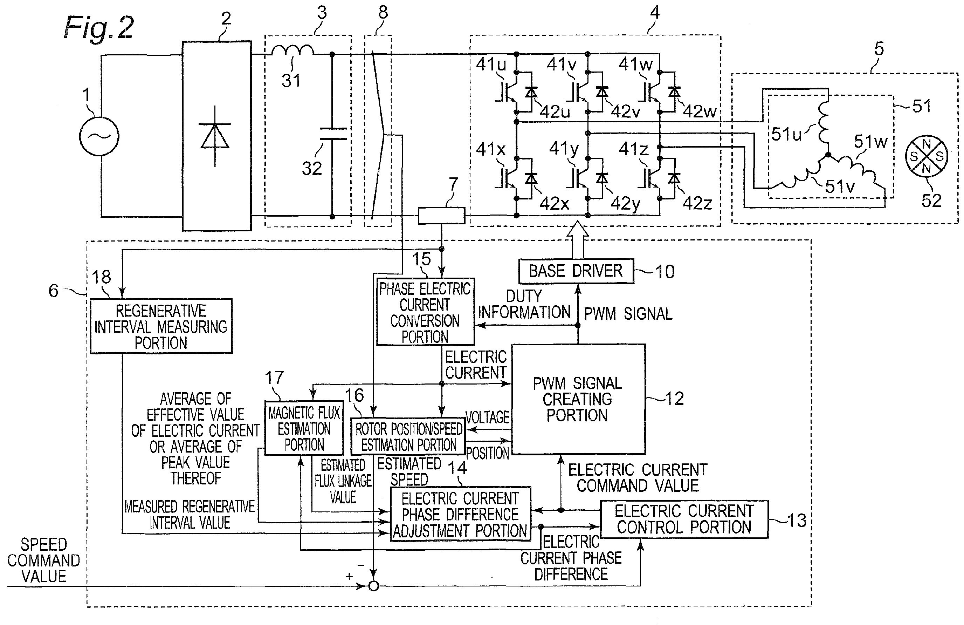

Fig. 2 is a view illustrating the system structure of an inverter control device according to a second embodiment of the present invention. In the second embodiment, components having the same functions and structures as those of the inverter control device according to the aforementioned first embodiment (Fig. 1) will be designated by the same reference characters and, also, in cases where these components perform the same operations thereas, the descriptions thereof will be omitted for preventing redundant descriptions, and only different matters thereof will be described.

The inverter control device according to the second embodiment is different from the inverter control device according to the first embodiment, in that there is provided, as a constituent, a regenerative-interval measuring portion 18 which is adapted to measure intervals during which a regenerative electric current flows into a capacitor 32 from a motor 5 at intervals of the variation period of a smoothened voltage, based on the detected value of an electric current in a DC-side bus line to/from a DC-AC conversion portion 4, which is detected by an electric-current detection portion 7. In the inverter control device according to the second embodiment, an electric-current phase-difference adjustment portion 14 is adapted to adjust the phase difference between the electric current and the induced voltage generated by the motor 5, such that an estimated flux-linkage value estimated by a magnetic-flux estimation portion 17 is equal to or less than a flux-linkage set value which has been preliminarily set, further the measured regenerative-interval value measured by the regenerative-interval measuring portion 18 is equal to or less than a regenerative-interval set value which has been preliminarily set and, also, at least one of the average value of an electric-current command value supplied to the motor 5 from an electric-current control portion 13, the average value of the effective value of the armature electric current resulted from the conversion by a phase-electric-current conversion portion 15 and the average value of the peak value of the armature electric current is minimized.

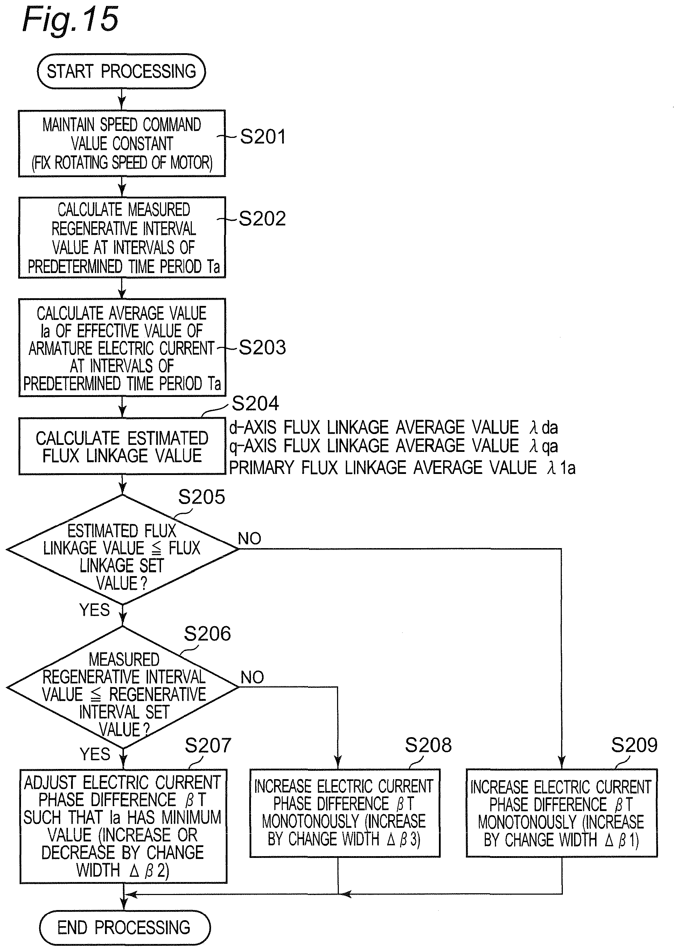

Hereinafter, the magnetic-flux estimation portion 17, the regenerative-interval measuring portion 18 and the electric-current phase-difference adjustment portion 14, which are characteristics in the inverter control device according to the second embodiment of the present invention, will be described, in detail, with reference to Fig. 15.

Fig. 15 is a view illustrating the general outline of a second processing flow in the inverter control device according to the second embodiment. Similarly to the inverter control device according to the aforementioned first embodiment, the inverter control device according to the second embodiment employs a capacitor 32 having a significantly-smaller capacitance in a smoothing portion 3, which causes the armature electric current in the motor 5 to largely pulse. Therefore, prior to the estimation of the flux linkage in the motor 5 by the magnetic-flux estimation portion 17, the motor 5 is fixed at a predetermined rotating speed, such as one of a plurality of rotating speeds in table data as described in the aforementioned first embodiment, for example, while the speed command value provided from the outside is maintained constant (S201).

Next, the regenerative-interval measuring portion 18 measures intervals during which the detected value of the electric current in the DC-side bus line to/from the DC-AC conversion portion 4, which is detected by the electric-current detection portion 7, is negative, at intervals of a predetermined time period Ta which has been preliminarily set (S202).

More specifically, the electric-current detection portion 7 detects the bus-line electric current at intervals of the carrier period Ts and, therefore, by counting, with a counter or the like, the number of times that the detected value of the bus-line electric current has gotten to be less than a predetermined value ($\pm\delta$, which is determined in consideration of influences of noises and the like), it is possible to calculate the measured regenerative-interval value Treg at intervals of the variation period of the smoothened voltage, according to the following Equation 11, assuming that the number of counts within a predetermined time period Ta (which is set to be an integer multiple of the variation period of the smoothened voltage and, thus, is M times thereof) is N.

[Numeral 15]

$$T\ r\ e\ g=N\times T\ s\diagup M \tag{11}$$

As described above, the regenerative-interval measuring portion 18 can use the detected value of the armature electric current flowing through the motor 5 in such a way as to share it with the phase-electric-current conversion portion 15, which eliminates the necessity of provision of an additional sensor or the like in the structure of the second embodiment, thereby offering an advantage in terms of the cost.

Next, the magnetic-flux estimation portion 17 calculates according to the Equation 4 the average value la of the effective value of the armature electric current resulted from the conversion by the phase-electric-current conversion portion 15, at intervals of the predetermined time period Ta which has been preliminarily set (S203).

Further, the magnetic-flux estimation portion 17 calculates the flux linkage in the orthogonal two-axis coordinate system, according to Equations 5 to 9, based on the average value la of the effective value of the armature electric current which has been calculated, and based on the respective preliminarily-set factors of the motor 5 (the d-axis inductance Ld, the q-axis inductance La, and the electromotive force coefficient A)(S204).

Next, the electric-current phase-difference adjustment portion 14 determines whether or not the estimated flux-linkage value (the d-axis flux-linkage average value $\lambda$da / the primary flux-linkage average value $\lambda$1a) which has been estimated by the magnetic-flux estimation portion 17 is equal to or less than a preliminarily-set flux-linkage set value (d-axis flux-linkage set value / primary flux-linkage set value) (S205). If the estimated flux-linkage value is larger than the flux-linkage set value, the electric-current phase difference $\beta$T is monotonously increased in steps of a predetermined change width $\Delta\beta$1 at intervals of the predetermined time period Ta for performing field weakening operations, until the estimated flux-linkage value (the d-axis flux-linkage average value $\lambda$da / the primary flux-linkage average value $\lambda$1a) gets to be equal to or less than the flux-linkage set value (d-axis flux-linkage set value / primary flux-linkage set value) (S209). In the aforementioned way, the total amount Ereg of the regenerative energy from the motor 5 can be controlled to be equal to or less than a predetermined limit value.

Next, after the estimated flux-linkage value (d-axis flux-linkage average value $\lambda$da / primary flux-linkage average value $\lambda$1a) has gotten to be equal to or less than the flux-linkage set value (d-axis flux-linkage set value / primary flux-linkage set value), in S205, the electric-current phase-difference adjustment portion 14 operates to determine whether or not the measured regenerative-interval value Treg measured by the regenerative-interval measuring portion 18 is equal to or less than a preliminarily-set regenerative-interval set value, at first (S206). If the measured regenerative-interval value Treg is larger than the regenerative-interval set value, the electric-current phase difference $\beta$T is monotonously increased in steps of a predetermined change width $\Delta\beta$3 (which is a change width smaller than $\Delta\beta$1 but larger than $\Delta\beta$2 ;$\Delta\beta$2<$\Delta\beta$3<$\Delta\beta$1) at intervals of the predetermined time period Ta for performing field weakening operations until the measured regenerative-interval value Treg gets to be equal to or less than the regenerative-interval set value, in order to optimize the regenerative intervals (S208).

At last, after the measured regenerative-interval value Treg has gotten to be equal to or less than the regenerative-interval set value in S206, the electric-current phase-difference adjustment portion 14 operates to change the electric-current phase difference $\beta$T by the predetermined change width $\Delta\beta$2 (which is a change width smaller than $\Delta\beta$1 and $\Delta\beta$3 ;$\Delta\beta$2<$\Delta\beta$3<$\Delta\beta$1) and to adjust the electric-current phase difference $\beta$T in such a way as to minimize the value of la, based on the difference in the average value la of the effective value of the armature electric current (which has been calculated according to Equation 4) between before and after the change of the electric-current phase difference βT (S207).

As described above, the regenerative energy from the motor 5 and the intervals during which the regenerative electric current flows therefrom are controlled to be equal to or less than respective predetermined values for certainly suppressing the intervals during which the input electric current from the AC power supply 1 is not conducted thereto to be equal to or less than a predetermined value and, also, for optimizing the efficiency of "the converter (the rectification portion and the smoothing portion) and the inverter (the DC-AC conversion portion)" (realizing a total efficiency with a minimum necessary value (a preliminarily-set target efficiency value)), while the armature electric current in the motor 5 is suppressed to a minimum necessary value for alleviating the reduction of the motor efficiency. This can optimize the efficiency of the entire system.

(Third Embodiment)

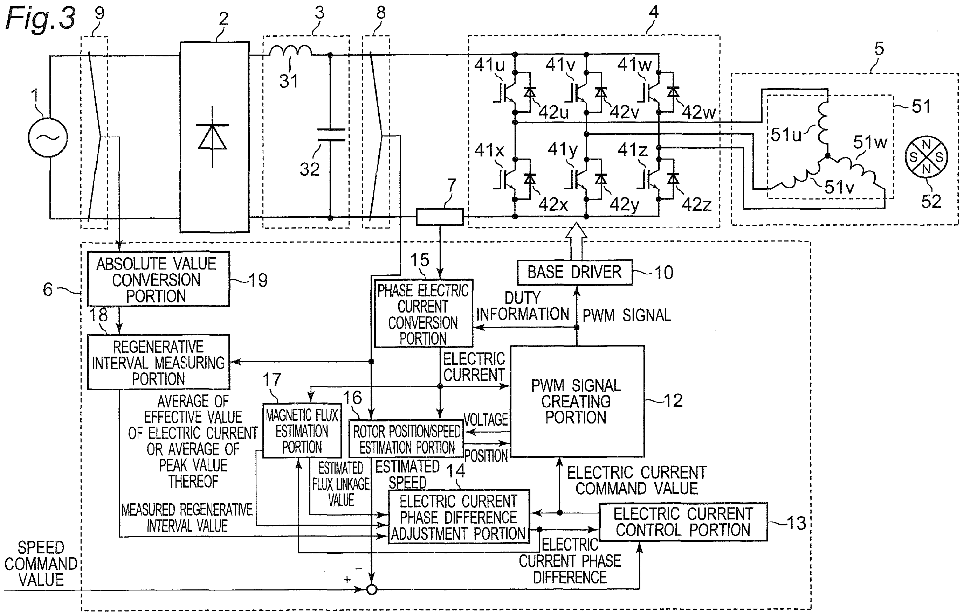

Fig. 3 is a view illustrating the system structure of an inverter control device according to a third embodiment of the present invention. In the third embodiment, components having the same functions and structures as those of the inverter control device according to the aforementioned first embodiment (Fig. 1) and the inverter control device according to the second embodiment (Fig. 2) will be designated by the same reference characters and, also, in cases where these components perform the same operations thereas, the descriptions thereof will be omitted for preventing redundant descriptions, and only different matters thereof will be described.

The inverter control device according to the third embodiment (Fig. 3) is different from the inverter control device according to the second embodiment (Fig. 2), in that there are provided, as constituents, an AC-voltage detection portion 9 as an AC-voltage detection means which is adapted to detect the voltage of the AC power supply 1, and an absolute-value conversion portion 19 for calculating the absolute value of the detected AC-voltage value Vac detected by the AC-voltage detection portion 9. In the inverter control device according to the third embodiment, a regenerative-interval measuring portion 18 is adapted to measure intervals during which a regenerative electric current flows into a capacitor 32 from a motor 5, based on the magnitude relationship between the absolute value |Vac| of the detected AC-voltage value obtained by the absolute-value conversion portion 19 and the detected smoothened-voltage value Vdc detected by a smoothened-voltage detection portion 8. Further, it is preferable that the detected AC-voltage value Vac and the detected smoothened-voltage value Vdc are detected at the same frequency and, also, they are detected at timings which are relatively close to each other.

More specifically, by setting the period of the detection of the detected AC-current value Vac and the detected smoothened-voltage value Vdc at Tsmp, and by causing the regenerative-interval measuring portion 18 to count, with a counter or the like, the number of times that "Vdc>|Vac|±δ2 (δ2 is set in consideration of influences of noises and the like)" has been satisfied, it is possible to calculate the measured regenerative-interval value Treg2 at intervals of the variation period of the smoothened voltage, according to the following Equation 12, assuming that the number of counts within a predetermined time period Ta (which is set to be an integer multiple of the variation period of the smoothened voltage and, thus, is M2 times thereof) is N2.

[Numeral 16]

$$\mathrm{T\,r\,e\,g\,2 = N\,2 \times T\,s\,m\,p \diagup M\,2} \qquad (12)$$

The operations of the other constituents are the same as those of the inverter control device according to the aforementioned second embodiment and, therefore, are not described herein.

As described above, the inverter control device according to the third embodiment is structured to measure the intervals during which the regenerative electric current is flowed into the capacitor 32 from the motor 5, based on the magnitude relationship between the absolute value |Vac| of the detected AC voltage value and the detected smoothened-voltage value Vdc. The inverter control device according to the third embodiment is capable of certainly measuring the intervals during which the regenerative electric current is flowed into the capacitor 32 from the motor 5, even in the event of voltage distortions in the AC power supply 1 and fluctuations of the power supply frequency.

Further, the inverter control devices according to the first to third embodiments have been described as being structured to include the electric-current control portion 13 which is adapted to derive an electric-current command value such that the rotating speed of the motor 5 agrees with a speed command value, based on an electric-current phase difference supplied thereto from an electric-current phase-difference adjustment portion 14, and based on information about the deviation of the rotating speed of the motor 5 which has been estimated by a rotor position/speed estimation portion 16 from the speed command value supplied from the outside. However, the inverter control device according to the present invention can be also structured to include a torque control portion for deriving a torque command value Tq* instead of an electric-current command value, and the electric-current phase-difference adjustment portion 14 can be structured to adjust the electric-current phase difference βT in such a way as to minimize the average value Tqa* of the torque command value Tq* at intervals of the predetermined time period Ta. For example, the torque command value Tq* can be derived by multiplying the electric-current command value I* by a gain K, as "Tq*=K×I*".

The inverter control devices according to the first to third embodiments have been described as being structured to include the rotor position/speed estimation portion 16 for estimating the rotating speed of the rotor 5 and the rotor magnet-pole positions in the rotor 5. However, it goes without saying that it is also possible to employ a position sensor for detecting the magnetic-pole positions in the rotor, such as an encoder or a resolver, instead of the rotor position/speed estimation portion 16.

The electric-current detection means (the electric-current detection portion 7) in the inverter control devices according to the first to third embodiments has been described as being structured to directly detect the electric current in the DC-side bus line to/from the DC-AC conversion portion 4 and to indirectly detect the armature electric current flowing through the motor 5 from the detected value of the electric current in the bus line. However, it goes without saying that it is also possible to employ an electric-current sensor, such as a DC-CT, as the electric-current detection means, in the inverter control device according to the present invention. In this case, it is possible to directly detect the armature electric current, which eliminates the necessity of the phase electric-current conversion portion 15.

Further, the inverter control devices according to the first to third embodiments can be adapted such that the electric-current phase-difference adjustment portion 14 performs the phase adjustment, only when the detected smoothened-voltage value detected by the smoothened-voltage detection portion 8 is smaller than an arbitrary set value, which can shorten the time required for processing with the microcomputer, the system LSI and the like. In this case, the arbitrary set value can be set in consideration of the AC voltage value of the AC power supply 1, the capacities of the reactor 31 and the capacitor 32 in the smoothing portion 3, and the like, within the range of the maximum value of the charging voltage across the capacitor 32 which is generated by the regenerative energy from the motor 5 to the maximum value of the smoothened voltage.

Further, the inverter control device according to the third embodiments can be adapted such that the electric-current phase-difference adjustment portion 14 performs the phase adjustment, only when the absolute value of the detected AC-voltage value detected by the absolute-value conversion portion 19 is smaller than an arbitrary set value, which can shorten the time required for processing with the microcomputer, the system LSI and the like. In this case, the arbitrary set value can be set in consideration of the AC voltage value of the AC power supply 1, the capacities of the reactor 31 and the capacitor 32 in the smoothing portion 3, and the like, within the range of the maximum value of the charging voltage across the capacitor 32 which is generated by the regenerative energy from the motor 5 to the maximum value of the absolute value of the detected AC-voltage value.

(cancelled)

## Industrial Applicability

As described above, the inverter control device according to the present invention employs the motor made to have a higher ratio of the reluctance torque adaptably to the inverter control device structured to include the capacitor with the smaller capacitance and, further, the inverter control device controls the regenerative energy from the motor, thereby optimizing the efficiency of the motor driving system. Therefore, the inverter control device according to the present invention is applicable to applications which involve driving motors, such as air conditioning apparatuses such as air conditioners, freezing refrigerators, vacuum cleaners and the like.

## Reference Signs List

| | |
|---|---|
| 1 | AC power supply |
| 2 | Rectification portion |
| 3 | Smoothing portion |
| 4 | DC-AC conversion portion |
| 5 | Motor |
| 6 | Driving control portion |
| 7 | Electric-current detection portion |
| 8 | Smoothed-voltage detection portion |
| 9 | AC-voltage detection portion |
| 10 | Base driver |
| 12 | PWM signal creating portion |
| 13 | Electric-current control portion |

| 14 | Electric-current phase-difference adjustment portion |
| 15 | Phase-electric-current conversion portion |
| 16 | Rotor position/speed estimation portion |
| 17 | Magnetic-flux estimation portion |
| 18 | Regenerative-interval measuring portion |
| 19 | Absolute-value conversion portion |
| 31 | Reactor |
| 32 | Capacitor |
| 41u to 41z | Switching devices |
| 42u to 42z | Freewheeling diode |
| 51 | Stator |
| 51u to 51z | Armature winding |
| 52 | Rotor |

**Claims**

1. An inverter control device for driving a motor (5) adapted to utilize a magnet torque generated by a field magnetic flux and an armature electric current, and a reluctance torque generated by the armature electric current and an inductance change in an armature winding (51u, 51v, 51w), in combination with each other, the inverter control device comprising:

   a rectification portion (2) to which an AC power supply (1) is inputted;
   a smoothing portion (3) having a capacitor (32) with a value set so that an output voltage from the rectification portion (2) pulses at a frequency which is about twice an AC-power-supply frequency;
   a DC-AC conversion portion (4) adapted to convert a smoothened voltage from the smoothing portion (3) into a desired AC voltage for driving the motor (5);
   a driving control portion (6) adapted to transmit, to the DC-AC conversion portion (4), information necessary for driving the motor (5) according to the smoothened voltage; and
   an electric-current detection portion (7) adapted to detect the armature electric current in the motor (5);
   wherein the driving control portion (6) includes a magnetic-flux estimation portion (17) adapted to estimate a flux linkage in the motor (5) based on the armature electric current detected by the electric-current detection portion (7), and an electric-current phase-difference adjustment portion (14) adapted to adjust a phase difference between the armature electric current and an induced voltage generated by the motor (5), **characterized in that** the electric-current phase-difference adjustment portion (14) is adapted to perform a phase adjustment, **in that** an electric-current phase difference ($\beta T$) is monotonously increased in steps of a first change width ($\Delta\beta1$) for performing field weakening operations, such that an estimated flux-linkage value estimated by the magnetic-flux estimation portion (17) is equal to or less than a preset flux-linkage value ($\lambda$Aset, $\lambda$Bset) and then, **in that** the electric-current phase difference ($\beta T$) is changed by a second change width ($\Delta\beta2$), such that at least one of an average value (Ia* or Tqa*) of an electric-current command value (I*) or a torque command value (Tq*) which is supplied to the motor (5), an average value (Ia) of an effective value of the armature electric current detected by the electric-current detection portion (7), and an average value (Ipa) of a peak value of the armature electric current detected by the electric-current detection portion (7) is minimized for controlling a total amount (Ereg) of regenerative energy from the motor (5) to the capacitor (32).

2. The inverter control device according to claim 1, wherein
   the magnetic-flux estimation portion (17) is adapted to estimate the flux linkage in an orthogonal two-axis coordinate system, through a calculation, based on respective preset factors of the motor (5), and the armature electric current detected by the electric-current detection portion (7).

3. The inverter control device according to claim 1 or 2, wherein
   the driving control portion (6) further includes a regenerative-interval measuring portion (18) adapted to measure an interval during which a regenerative electric current is flowed into the capacitor (32) from the motor (5),
   the electric-current phase-difference adjustment portion (14) is adapted to perform the phase adjustment in that after the electric-current phase difference ($\beta$) is monotonously increased in steps of a first change width ($\Delta\beta1$), the electric-current phase difference ($\beta T$) is monotonously increased in steps of a third change width ($\Delta\beta3$) for performing the field weakening operations, such that a measured regenerative-interval value (Treg) measured by the regenerative-interval measuring portion (18) is equal to or less than a preset regenerative-interval value before the electric-current phase difference (βT) is changed by a second change width (Δβ2).

4. The inverter control device according to claim 2, further comprising
an AC-voltage detection portion (9) adapted to detect a voltage from the AC power supply (1), an absolute-value conversion portion (19) adapted to calculate the absolute value (|Vac|) of the detected AC voltage value (Vac) detected by the AC-voltage detection portion (9), and a smoothed-voltage detection portion (8) adapted to detect the smoothened voltage,
wherein a regenerative-interval measuring portion (18) is adapted to measure the interval during which the regenerative electric current is flowed into the capacitor (32) from the motor (5), based on a magnitude relationship between the absolute value (|Vac|) of the detected AC-voltage value (Vac) resulted from the conversion by the absolute-value conversion portion (19) and the detected smoothened-voltage value detected by the smoothened-voltage detection portion (8).

5. The inverter control device according to claim 3, further comprising
an AC-voltage detection portion (9) adapted to detect a voltage from the AC power supply (1), an absolute-value conversion portion (19) adapted to calculate the absolute value (|Vac|) of the detected AC voltage value (Vac) detected by the AC-voltage detection portion(9), and a smoothed-voltage detection portion (8) adapted to detect the smoothened voltage,
wherein the regenerative-interval measuring portion (18) is adapted to measure the interval during which the regenerative electric current is flowed into the capacitor (32) from the motor (5), based on a magnitude relationship between the absolute value (|Vac|) of the detected AC-voltage value (Vac) resulted from the conversion by the absolute-value conversion portion (19) and the detected smoothened-voltage value (dc) detected by the smoothened-voltage detection portion (8).

6. The inverter control device according to claim 2, wherein
the electric-current detection portion (7) is adapted to directly detect an electric current in a DC-side bus line to/from the DC-AC conversion portion (4) and to indirectly detect the armature electric current flowing through the motor (5), from the detected value of the electric current in the bus line,
a regenerative-interval measuring portion (18) is adapted to measure the interval during which the regenerative electric current is flowed into the capacitor (32) from the motor (5), based on the detected value of the electric current in the bus line.

7. The inverter control device according to claim 3, wherein
the electric-current detection portion (7) is adapted to directly detect an electric current in a DC-side bus line to/from the DC-AC conversion portion (4) and to indirectly detect the armature electric current flowing through the motor (5), from the detected value of the electric current in the bus line,
the regenerative-interval measuring portion (18) is adapted to measure the interval during which the regenerative electric current is flowed into the capacitor (32) from the motor (5), based on the detected value of the electric current in the bus line.

8. The inverter control device according to any one of claims 1, 2, 3, 6 and 7, further comprising a smoothened-voltage detection portion (8) adapted to detect the smoothened voltage,
wherein the electric-current phase-difference adjustment portion (14) is adapted to perform a phase adjustment, only when the detected smoothened-voltage value (dc) detected by the smoothened-voltage detection portion (8) is less than an arbitrary set value.

9. The inverter control device according to any one of claims 1, 2, 3, 6 and 7, further comprising an AC-voltage detection portion (9) adapted to detect a voltage from the AC power supply (1), and an absolute-value conversion portion (19) adapted to calculate the absolute value (|Vac|) of the detected AC voltage value (Vac) detected by the AC-voltage detection portion (9),
the electric-current phase-difference adjustment portion (14) is adapted to perform a phase adjustment, only when the absolute value (|Vac|) of the detected AC-voltage value (Vac) resulted from the conversion by the absolute-value conversion portion (19) is less than an arbitrary set value.

10. The inverter control device according to claim 4 or 5,
wherein the electric-current phase-difference adjustment portion (14) is adapted to perform a phase adjustment, only when at least one of the detected smoothened-voltage value (dc) detected by the smoothened-voltage detection portion (8), and the absolute value (|Vac|) of the detected AC-voltage value (Vac) resulted from the conversion by the absolute-value conversion portion (19) is less than an arbitrary set value.

11. The inverter control device according to any one of claims 1 to 10, wherein
the smoothing portion (3) comprises a capacitor (32) and a reactor (31), and a resonance frequency determined by the capacitor (32) and the reactor (31) is set to be equal to or more than 40 times the AC-power-supply frequency.

12. The inverter control device according to any one of claims 1 to 11, wherein
the flux-linkage set value ($\lambda$Aset, $\lambda$Bset) is set to be equal to or less than 2.5 times the flux linkage of when the regenerative energy charged in the capacitor (32) from the motor (5) is zero.

13. The inverter control device according to any one of claims 1 to 12, wherein
a specification of the motor (5) is determined, such that the flux linkage in the motor (5) which is controlled by the driving control portion (6) is equal to or less than 2.5 times the flux linkage of when the regenerative energy charged in the capacitor (32) from the motor (5) is zero, at a predetermined rotating speed and load torque.

**Patentansprüche**

1. Umrichtersteuerungsvorrichtung zum Ansteuern eines Motors (5), ausgelegt, ein Magnetdrehmoment, das durch einen Magnetfeldfluss und einen elektrischen Ankerstrom erzeugt wird, und ein Reluktanzdrehmoment, das durch den elektrischen Ankerstrom und eine Induktivitätsänderung in einer Ankerwicklung (51u, 51v, 51w) erzeugt wird, in Kombination miteinander zu nutzen, wobei die Umrichtersteuerungsvorrichtung umfasst:

   einen Gleichrichtteil (2), in den die Wechselstromversorgung (1) eingegeben wird;
   einen Glättungsteil (3) mit einem Kondensator (32) mit einem so festgelegten Wert, dass eine Ausgangsspannung aus dem Gleichrichtteil (2) bei einer Frequenz pulsiert, die ungefähr das Doppelte einer Wechselstromversorgungsfrequenz beträgt;
   einen Gleichstrom-Wechselstrom-Umwandlungsteil (4), ausgelegt, eine geglättete Spannung aus dem Glättungsteil (3) in eine gewünschte Wechselspannung zum Ansteuern des Motors (5) umzuwandeln;
   einen Ansteuer-Steuerungsteil (6), ausgelegt, zum Gleichstrom-Wechselstrom-Umwandlungsteil (4) Informationen zu übertragen, die gemäß der geglätteten Spannung notwendig zum Ansteuern des Motors (5) sind; und
   einen Strommessteil (7), ausgelegt, den Ankerstrom in dem Motor (5) zu messen;
   wobei der Ansteuer-Steuerungsteil (6) enthält: einen Magnetfluss-Schätzteil (17), ausgelegt, eine Flussverkettung in dem Motor (5) auf Grundlage des durch den Strommessteil (7) gemessenen Ankerstroms zu schätzen, und einen Stromphasendifferenz-Justierteil (14), ausgelegt, eine Phasendifferenz zwischen dem Ankerstrom und einer durch den Motor (5) erzeugten induzierten Spannung zu justieren, **dadurch gekennzeichnet, dass** der Stromphasendifferenz-Justierteil (14) ausgelegt ist, eine Phasenjustierung durchzuführen, indem die Stromphasendifferenz ($\beta$T) in Schritten einer ersten Änderungsweite ($\Delta\beta$1) monoton erhöht wird, um Feldschwächungsvorgänge durchzuführen, sodass ein durch den Magnetfluss-Schätzteil (17) geschätzter Flussverkettungswert gleich oder kleiner als ein vorgegebener Flussverkettungswert ($\lambda$Aset, $\lambda$Bset) ist, und dann, indem die Stromphasendifferenz ($\beta$T) um eine zweite Änderungsweite ($\Delta\beta$2) geändert wird, sodass mindestens einer aus einem Mittelwert (Ia* oder Tqa*) eines Stromsteuerwerts (I*) oder eines Drehmomentsteuerwerts (Tq*), der dem Motor (5) zugeführt wird, einem Mittelwert (Ia) eines Effektivwerts des durch den Strommessteil (7) gemessenen Ankerstroms und einem Mittelwert (Ipa) eines Spitzenwerts des durch den Strommessteil (7) gemessenen Ankerstroms minimiert wird, um einen Gesamtbetrag (Ereg) regenerativer Energie von dem Motor (5) zum Kondensator (32) zu steuern.

2. Umrichtersteuerungsvorrichtung nach Anspruch 1, wobei
der Magnetfluss-Schätzteil (17) ausgelegt ist, die Flussverkettung in einem rechtwinkligen zweiachsigen Koordinatensystem durch eine Berechnung zu schätzen, die auf jeweiligen vorgegebenen Faktoren des Motors (5) und auf dem durch den Strommessteil (7) gemessenen Ankerstrom beruht.

3. Umrichtersteuerungsvorrichtung nach Anspruch 1 oder 2, wobei der Ansteuer-Steuerungsteil (6) weiter einen Regenerativintervallmessteil (18) enthält, ausgelegt, ein Intervall zu messen, während dessen ein regenerativer Strom vom Motor (5) in den Kondensator (32) fließt,
der Stromphasendifferenz-Justierteil (14) ausgelegt ist, die Phasenjustierung durchzuführen, indem, nachdem die Stromphasendifferenz ($\beta$T) in Schritten einer ersten Änderungsweite ($\Delta\beta$1) monoton erhöht wurde, die Stromphasendifferenz ($\beta$T) in Schritten einer dritten Änderungsweite ($\Delta\beta$3) monoton erhöht wird, um die Feldschwächungsvorgänge durchzuführen, sodass ein durch den Regenerativintervallmessteil (18) gemessener Regenerativintervallwert (Treg) gleich oder kleiner ist als ein vorgegebener Regenerativintervallwert, bevor die Stromphasendifferenz (βT) um eine zweite Änderungsweite (Δβ2) geändert wird.

4. Umrichtersteuerungsvorrichtung nach Anspruch 2, weiter umfassend:

einen Wechselspannungsmessteil (9), ausgelegt, eine Spannung aus der Wechselstromversorgung (1) zu messen, einen Absolutwertumwandlungsteil (19), ausgelegt, den Absolutwert (|Vac|) des durch den Wechselspannungsmessteil (9) gemessenen Wechselspannungswerts (Vac) zu berechnen, und einen Messteil (8) für die geglättete Spannung, ausgelegt, die geglättete Spannung zu messen,
wobei ein Regenerativintervallmessteil (18) ausgelegt ist, das Intervall, während dessen der regenerative Strom vom Motor (5) in den Kondensator (32) fließt, auf Grundlage einer Größenbeziehung zwischen dem Absolutwert (|Vac|) des gemessenen Wechselspannungswerts (Vac), der sich aus der Umwandlung durch den Absolutwertumwandlungsteil (19) ergibt, und dem durch den Messteil (8) für die geglättete Spannung gemessenen Wert der geglätteten Spannung zu messen.

5. Umrichtersteuerungsvorrichtung nach Anspruch 3, weiter umfassend:

einen Wechselspannungsmessteil (9), ausgelegt, eine Spannung aus der Wechselstromversorgung (1) zu messen, einen Absolutwertumwandlungsteil (19), ausgelegt, den Absolutwert (|Vac|) des durch den Wechselspannungsmessteil (9) gemessenen Wechselspannungswerts (Vac) zu berechnen, und einen Messteil (8) für die geglättete Spannung, ausgelegt, die geglättete Spannung zu messen,
wobei ein Regenerativintervallmessteil (18) ausgelegt ist, das Intervall, während dessen der regenerative Strom vom Motor (5) in den Kondensator (32) fließt, auf Grundlage einer Größenbeziehung zwischen dem Absolutwert (|Vac|) des gemessenen Wechselspannungswerts (Vac), der sich aus der Umwandlung durch den Absolutwertumwandlungsteil (19) ergibt, und dem durch den Messteil (8) für die geglättete Spannung gemessenen Wert der geglätteten Spannung (dc) zu messen.

6. Umrichtersteuerungsvorrichtung nach Anspruch 2, wobei
der Strommessteil (7) ausgelegt ist, einen Strom in einer gleichspannungsseitigen Busleitung zum/vom Gleichstrom-Wechselstrom-Umwandlungsteil (4) direkt zu messen, und den durch den Motor (5) fließenden Ankerstrom aus dem gemessenen Wert des Stroms in der Busleitung indirekt zu messen,
ein Regenerativintervallmessteil (18) ausgelegt ist, das Intervall, während dessen der regenerative Strom vom Motor (5) zum Kondensator (32) strömt, auf Grundlage des gemessenen Werts des Stroms in der Busleitung zu messen.

7. Umrichtersteuerungsvorrichtung nach Anspruch 3, wobei
der Strommessteil (7) ausgelegt ist, einen Strom in einer gleichspannungsseitigen Busleitung zum/vom Gleichstrom-Wechselstrom-Umwandlungsteil (4) direkt zu messen, und den durch den Motor (5) fließenden Ankerstrom aus dem gemessenen Wert des Stroms in der Busleitung indirekt zu messen,
der Regenerativintervallmessteil (18) ausgelegt ist, das Intervall, während dessen der regenerative Strom vom Motor (5) zum Kondensator (32) strömt, auf Grundlage des gemessenen Werts des Stroms in der Busleitung zu messen.

8. Umrichtersteuerungsvorrichtung nach einem der Ansprüche 1, 2, 3, 6 und 7, weiter umfassend einen Messteil (8) für die geglättete Spannung, ausgelegt, die geglättete Spannung zu messen,
wobei der Stromphasendifferenz-Justierteil (14) ausgelegt ist, eine Phasenjustierung nur durchzuführen, wenn der durch den Messteil (8) für die geglättete Spannung gemessene Wert der geglätteten Spannung (dc) niedriger ist als ein willkürlich festgelegter Wert.

9. Umrichtersteuerungsvorrichtung nach einem der Ansprüche 1, 2, 3, 6 und 7, weiter umfassend einen Wechselspannungsmessteil (9), ausgelegt, eine Spannung aus der Wechselstromversorgung (1) zu messen, und einen Absolutwertumwandlungsteil (19), ausgelegt, den Absolutwert (|Vac|) des durch den Wechselspannungsmessteil (9) gemessenen Wechselspannungswerts (Vac) zu berechnen,
wobei der Stromphasendifferenz-Justierteil (14) ausgelegt ist, eine Phasenjustierung nur durchzuführen, wenn der sich aus der Umwandlung durch den Absolutwertumwandlungsteil (19) ergebende Absolutwert (|Vac|) des gemessenen Wechselspannungswerts (Vac) niedriger ist als ein willkürlich festgelegter Wert.

10. Umrichtersteuerungsvorrichtung nach Anspruch 4 oder 5,
wobei der Stromphasendifferenz-Justierteil (14) ausgelegt ist, eine Phasenjustierung nur durchzuführen, wenn mindestens einer aus dem durch den Messteil (8) für die geglättete Spannung gemessenen Wert der geglätteten Spannung (dc) und dem sich aus der Umwandlung durch den Absolutwertumwandlungsteil (19) ergebenden Absolutwert (|Vac|) des gemessenen Wechselspannungswerts (Vac) niedriger ist als ein willkürlich festgelegter Wert.

**11.** Umrichtersteuerungsvorrichtung nach einem der Ansprüche 1 bis 10, wobei
der Glättungsteil (3) einen Kondensator (32) und eine Drossel (31) umfasst, und eine durch den Kondensator (32) und die Drossel (31) bestimmte Resonanzfrequenz so festgelegt ist, dass sie gleich dem oder größer als das 40-Fache der Wechselstromversorgungsfrequenz ist.

**12.** Umrichtersteuerungsvorrichtung nach einem der Ansprüche 1 bis 11, wobei
der Flussverkettungssollwert (λAset, λBset) so festgelegt ist, dass er gleich oder niedriger ist als das 2,5-Fache der Flussverkettung des Zustands, wenn die vom Motor (5) in den Kondensator (32) geladene regenerative Energie Null ist.

**13.** Umrichtersteuerungsvorrichtung nach einem der Ansprüche 1 bis 12, wobei
eine Auslegung des Motors (5) so bestimmt ist, dass die Flussverkettung im Motor (5), die durch den Ansteuer-Steuerungsteil (6) gesteuert wird, bei einer vorgegebenen Drehzahl und einem vorgegebenen Lastdrehmoment gleich oder niedriger ist als das 2,5-Fache der Flussverkettung des Zustands, wenn die vom Motor (5) in den Kondensator (32) geladene regenerative Energie Null ist.

## Revendications

**1.** Dispositif de commande d'onduleur pour entraîner un moteur (5) conçu pour utiliser un couple d'aimant créé par un flux magnétique de champ et par un courant électrique d'armature et un couple de réductance créé par le courant électrique d'armature et par un changement d'inductance dans un enroulement (51u, 51v, 51w) d'armature, en combinaison l'un avec l'autre, le dispositif de commande d'onduleur comprenant:

une partie (2) de redressement auquel est appliquée une source (1) de courant alternatif;
une partie (3) de lissage ayant un condensateur (32) d'une valeur fixée de manière à ce qu'une tension de sortie de la partie (2) de redressement pulse à une fréquence, qui est égale à environ deux fois une fréquence de la source de courant alternatif;
une partie (4) de transformation courant continu-courant alternatif conçue pour transformer une tension lissée de la partie (3) de lissage en une tension en courant alternatif souhaitée pour entraîner le moteur (5);
une partie (6) de commande d'entraînement conçue pour transmettre à la partie (4) de transformation courant continu-courant alternatif l'information nécessaire pour entraîner le moteur (5) suivant la tension lissée et
une partie (7) de détection du courant électrique conçue pour détecter le courant électrique d'armature dans le moteur (5);
dans lequel la partie (6) de commande d'entraînement comprend une partie (17) d'estimation de flux magnétique conçue pour estimer le flux embrassé dans le moteur (5) sur la base du courant électrique d'armature détecté par la partie (7) de détection de courant électrique et une partie (14) d'ajustement d'une différence de phase de courant électrice conçue pour ajuster une différence de phase entre le courant électrique d'armature et une tension induite créée par le moteur (5), **caractérisé en ce que**
la partie (14) d'ajustement de différence de phase de courant électrique est conçue pour effectuer un ajustement de phase, **en ce qu'**une différence ($\beta$T) de phase de courant électrique est augmentée d'une manière monotone par stades d'une première largeur ($\Delta\beta$1) de changement, pour effectuer des opérations d'affaiblissement du champ, de manière à ce qu'une valeur estimée du flux embrassé, estimée par la partie (17) d'estimation de flux magnétique, soit inférieure ou égale à une valeur (λAset, λBset) préfixée du flux embrassé et ensuite **en ce que** la différence ($\beta$T) de phase de courant électrique est changée par une deuxième largeur ($\Delta\beta$2) de changement, de manière à ce qu'au moins l'une, d'une valeur (Ia* ou Tqa*) moyenne d'une valeur (I*) de commande de courant électrique ou d'une valeur (Tq*) de commande de couple, qui est envoyée au moteur (5), une valeur (Ia) moyenne d'une valeur effective du courant électrique d'armature détectée par la partie (7) de détection de courant électrique et d'une valeur (Ipa) moyenne d'une valeur de crête du courant électrique d'armature détectée par la partie (7) de détection de courant électrique soit minimisée pour commander une quantité (Ereg) totale d'énergie de régénération du moteur (5) au condensateur (32).

**2.** Dispositif de commande d'onduleur suivant la revendication 1, dans lequel
la partie (17) d'estimation de flux magnétique est conçue pour estimer le flux embrassé dans un système de coordonnées à deux axes orthogonaux, par l'intermédiaire d'un calcul reposant sur des facteurs respectifs fixés à l'avance du moteur (5) et du courant électrique d'armature détecté par la partie (7) de détection de courant électrique.

3. Dispositif de commande d'onduleur suivant la revendication 1 ou 2, dans lequel
   la partie (6) de commande d'entraînement comprend en outre une partie (18) de mesure d'intervalle de régénération conçue pour mesurer un intervalle pendant lequel un courant électrique de régénération passe dans le condensateur (32) à partir du moteur (5),
   la partie (14) d'ajustement de différence de phase de courant électrique étant conçue pour effectuer l'ajustement de phase, en ce que, après que la différence ($\beta T$) de phase de courant électrique a augmenté de manière monotone en échelons, d'une première largeur ($\Delta\beta1$) de changement, la différence ($\beta T$) de phase de courant électrique est augmentée d'une manière monotone en échelons d'une troisième largeur ($\Delta\beta3$) de changement pour effectuer les opérations d'affaiblissement du champ, de manière à ce qu'une valeur (Treg) d'intervalle de régénération mesurée, mesurée par la partie (18) de mesure de l'intervalle de régénération, soit inférieure ou égale à un intervalle de valeur de régénération fixé à l'avance avant que la différence ($\beta T$) de phase de courant électrique soit changée par une deuxième largeur ($\Delta\beta2$) de changement.

4. Dispositif de commande d'onduleur suivant la revendication 2, comprenant en outre
   une partie (9) de détection de tension de courant alternatif conçue pour détecter une tension de l'alimentation (1) en courant alternatif, une partie (19) de transformation de valeur absolue conçue pour calculer la valeur ($|Vac|$) absolue de la valeur (Vac) détectée de tension en courant alternatif, détectée par la partie (9) de détection de tension en courant alternatif et une partie (8) de détection de tension lissée conçue pour détecter la tension lissée,
   dans lequel une partie (18) de mesure d'intervalle de régénération est conçue pour mesurer l'intervalle pendant lequel le courant électrique de régénération passe dans le condensateur (32) à partir du moteur (5), sur la base d'une relation d'amplitude entre la valeur ($|Vac|$) absolue de la valeur (Vac) détectée de tension en courant alternatif, provenant de la transformation par la partie (19) de transformation de valeur absolue et la valeur détectée de tension lissée, détectée par la partie (8) de détection de tension lissée.

5. Dispositif de commande d'onduleur suivant la revendication 3, comprenant en outre
   une partie (9) de détection de tension alternative conçue pour détecter une tension de la source (1) d'alimentation en courant alternatif, une partie (19) de transformation de valeur absolue conçue pour calculer la valeur ($|Vac|$) absolue de la valeur (Vac) détectée de tension en courant alternatif, détectée par la partie (9) de détection de tension en courant alternatif, et une partie (8) de détection de tension lissée conçue pour détecter la tension lissée,
   dans lequel la partie (18) de mesure d'un intervalle de régénération est conçue pour mesurer l'intervalle pendant lequel le courant électrique de régénération passe dans le condensateur (32) à partir du moteur (5), sur la base d'une relation d'amplitude entre la valeur ($|Vac|$) absolue de la valeur (Vac) détectée de tension en courant alternatif, provenant de la transformation, par la partie (19) de transformation de valeur absolue, et de la valeur (dc) détectée de tension lissée, détectée par la partie (8) de détection de la tension lissée.

6. Dispositif de commande d'onduleur suivant la revendication 2, dans lequel
   la partie (7) de détection de courant électrique est conçue pour détecter directement un courant électrique dans une ligne de bus du côté du courant continu, allant à la partie (4) de transformation courant continu-courant alternatif ou en partant et pour détecter indirectement le courant électrique d'armature passant dans le moteur (5), à partir de la valeur détectée du courant électrique dans la ligne de bus,
   une partie (18) de mesure d'un intervalle de régénération est conçue pour mesurer l'intervalle pendant lequel le courant électrique de régénération passe dans le condensateur (32) à partir du moteur (5), sur la base de la valeur détectée du courant électrique dans la ligne de bus.

7. Dispositif de commande d'onduleur suivant la revendication 3, dans lequel
   la partie (7) de détection de courant électrique est conçue pour détecter directement un courant électrique dans une ligne de bus du côté du courant continu, allant à la partie (4) de transformation courant continu-courant alternatif ou en partant et pour détecter indirectement le courant électrique d'armature passant dans le moteur (5), à partir de la valeur détectée du courant électrique dans la ligne de bus,
   la partie (18) de mesure d'intervalle de régénération est conçue pour mesurer l'intervalle pendant lequel le courant électrique de régénération a passé dans le condensateur (32) à partir du moteur (5), sur la base de la valeur détectée du courant électrique dans la ligne de bus.

8. Dispositif de commande d'onduleur suivant l'une quelconque des revendications 1, 2, 3, 6 et 7, comprenant en outre
   une partie (8) de détection d'une tension lissée conçue pour détecter la tension lissée,

dans lequel la partie (14) d'ajustement de différence de phase de courant électrique est conçue pour effectuer un ajustement de phase seulement lorsque la valeur (dc) détectée de tension lissée, détectée par la partie (8) de détection de la tension lissée, est inférieure à une valeur fixée arbitrairement.

9. Dispositif de commande d'onduleur suivant l'une quelconque des revendications 1, 2, 3, 6 et 7, comprenant en outre une partie (9) de détection de tension en courant alternatif conçue pour détecter une tension d'une source (1) de courant alternatif et une partie (19) de transformation de valeur absolue conçue pour calculer la valeur (|Vac|) absolue de la valeur (Vac) détectée de la tension en courant alternatif détectée par la partie (9) de détection de la tension en courant alternatif,
la partie (14) d'ajustement de différence de phase de courant électrique est conçue pour effectuer un ajustement de phase seulement lorsque la valeur (|Vac|) absolue de la valeur (Vac) détectée de la tension en courant alternatif provenant de la transformation par la partie (19) de transformation de valeur absolue est inférieure à une valeur fixée de manière arbitraire.

10. Dispositif de commande d'onduleur suivant la revendication 4 ou 5,
dans lequel la partie (14) d'ajustement de différence de phase de courant électrique est conçue pour effectuer un ajustement de phase seulement lorsqu'au moins l'une de la valeur (dc) détectée de tension lissée détectée par la partie (8) de détection de tension lissée et la valeur (|Vac|) absolue de la valeur (Vac) détectée de la tension en courant alternatif provenant de la transformation par la partie (19) de transformation de valeur absolue est inférieure à une valeur fixée arbitrairement.

11. Dispositif de commande d'onduleur suivant l'une quelconque des revendications 1 à 10,
dans lequella partie (3) de lissage comprenant un condensateur (32) et une réactance (31) et une fréquence de résonance déterminée par le condensateur (32) et la réactance (31) est fixée de manière à être supérieure ou égale à 40 fois la fréquence de la source de courant alternatif.

12. Dispositif de commande d'onduleur suivant l'une quelconque des revendications 1 à 11, dans lequel
la valeur (λAset, λBset) fixée du flux embrassé est fixée de manière à être inférieure ou égale à 2,5 fois le flux embrassé lorsque l'énergie de régénération chargée dans le condensateur (32) par le moteur (5) est nulle.

13. Dispositif de commande d'onduleur suivant l'une quelconque des revendications 1 à 12, dans lequel
une spécification du moteur (5) est déterminée de manière à ce que le flux embrassé dans le moteur (5) est commandé par la partie (6) de commande d'entraînement soit inférieur ou égal à 2,5 fois le flux embrassé lorsque l'énergie de régénération chargée dans le condensateur (32) à partir du moteur (5) est nulle, à une vitesse de rotation et à un couple de charge déterminés à l'avance.

*Fig.1*

EP 2 804 311 B1

Fig.2

EP 2 804 311 B1

Fig.3

# Fig.4

EP 2 804 311 B1

ELECTRIC ANGLE 330  0  30  60  90  120  150  180  210  240  270  300  330  360

| | U-PHASE ELECTRIC CURRENT |
| --- | --- |
| | V-PHASE ELECTRIC CURRENT |
| | W-PHASE ELECTRIC CURRENT |

51u

51v  51w

Fig.5

# *Fig.6*

TIMING

1

41u  41v  41w
42u  42v  42w
41x  41y  41z
42x  42y  42z

51u
51v  51w

2

W-PHASE
ELECTRIC CURRENT

3

V-PHASE
ELECTRIC CURRENT

*Fig.7*

# Fig.8

TIMING

1

41u  41v  41w
42u  42v  42w
41x  41y  41z
42x  42y  42z

51u
51v  51w

2

U-PHASE
ELECTRIC CURRENT

3

W-PHASE
ELECTRIC CURRENT

Fig.9

(a) AC VOLTAGE ABSOLUTE VALUE AND SMOOTHENED VOLTAGE

TOTAL AMOUNT Ereg OF REGENERATIVE ENERGY
(AREA OF OBLIQUE FACE PORTION)

[SOLID LINE PORTION]
SMOOTHENED VOLTAGE

[BROKEN LINE PORTION]
AC VOLTAGE ABSOLUTE VALUE

(b) BUS LINE ELECTRIC CURRENT

POSITIVE (POWERING)

NEGATIVE (REGENERATIVE)

REGENERATIVE INTERVAL

EP 2 804 311 B1

# Fig.10

(a) AC VOLTAGE ABSOLUTE VALUE AND SMOOTHENED VOLTAGE

TOTAL AMOUNT Ereg OF REGENERATIVE ENERGY (AREA OF OBLIQUE FACE PORTION)

【SOLID LINE PORTION】 SMOOTHENED VOLTAGE

【BROKEN LINE PORTION】 AC VOLTAGE ABSOLUTE VALUE

(b) BUS LINE ELECTRIC CURRENT

POSITIVE(POWERING)

NEGATIVE(REGENERATIVE)

REGENERATIVE INTERVAL

EP 2 804 311 B1

# Fig. 11

FLUX LINKAGE

FLUX LINKAGE SET VALUE B
($\lambda$ Bset)

LOAD CONDITION B

$\lambda$ B0

FLUX LINKAGE SET VALUE A
($\lambda$ Aset)

LOAD CONDITION A

$\lambda$ A0

0

LIMIT VALUE OF TOTAL AMOUNT OF
REGENERATIVE ENERGY

TOTAL AMOUNT Ereg OF
REGENERATIVE ENERGY

EP 2 804 311 B1

*Fig.12*

(a) CONVERTER EFFICIENCY
(RECTIFICATION PORTION +
SMOOTHING PORTION)

TOTAL AMOUNT Ereg OF
REGENERATIVE ENERGY

(b) INVERTER EFFICIENCY
(DC-AC CONVERSION PORTION)

TOTAL AMOUNT Ereg OF
REGENERATIVE ENERGY

(c) TOTAL EFFICIENCY
(CONVERTER + INVERTER)

TARGET EFFICIENCY VALUE

TOTAL AMOUNT Ereg OF
REGENERATIVE ENERGY

0

LIMIT VALUE OF TOTAL AMOUNT
OF REGENERATIVE ENERGY

Fig.13

## Fig.14

```
         ( START PROCESSING )
                  │
                  │ S101
                  ▼
  ┌──────────────────────────────┐
  │  MAINTAIN SPEED COMMAND       │
  │      VALUE CONSTANT           │
  │ (FIX ROTATING SPEED OF MOTOR) │
  └──────────────────────────────┘
                  │
                  │ S102
                  ▼
  ┌──────────────────────────────┐
  │ CALCULATE AVERAGE VALUE Ia OF │
  │  EFFECTIVE VALUE OF ARMATURE  │
  │  ELECTRIC CURRENT AT INTERVALS│
  │OF PREDETERMINED TIME PERIOD Ta│
  └──────────────────────────────┘
                  │
                  │ S103
                  ▼
  ┌──────────────────────────────┐       D-AXIS FLUX LINKAGE AVERAGE VALUE $\lambda$da
  │   CALCULATE ESTIMATED         │       Q-AXIS FLUX LINKAGE AVERAGE VALUE $\lambda$qa
  │   FLUX LINKAGE VALUE          │       PRIMARY FLUX LINKAGE AVERAGE VALUE $\lambda$1a
  └──────────────────────────────┘
                  │
                  │   S104
                  ▼
           ╱  MATED FLUX  ╲
          ╱ LINKAGE VALUE ≦ ╲   NO
         ╱  FLUX LINKAGE SET  ╲──────────────────────┐
          ╲     VALUE ?      ╱                        │
           ╲                ╱                         │
              │ YES    S105                           │ S106
              ▼                                       ▼
  ┌──────────────────────────────┐    ┌──────────────────────────────┐
  │ ADJUST ELECTRIC CURRENT       │    │ INCREASE ELECTRIC CURRENT     │
  │ PHASE DIFFERENCE $\beta$T SUCH │    │ PHASE DIFFERENCE $\beta$T     │
  │ THAT Ia HAS MINIMUM VALUE     │    │ MONOTONOUSLY (INCREASE BY     │
  │ (INCREASE OR DECREASE BY      │    │ CHANGE WIDTH $\Delta\beta$1)  │
  │ CHANGE WIDTH $\Delta\beta$2)  │    └──────────────────────────────┘
  └──────────────────────────────┘                   │
              │◄───────────────────────────────────── ┘
              ▼
       ( END PROCESSING )
```

# Fig.15

```
                    ( START PROCESSING )
                             │
                             ▼
            ┌─────────────────────────────┐
            │     MAINTAIN SPEED COMMAND    │   S201
            │         VALUE CONSTANT        │
            │  (FIX ROTATING SPEED OF MOTOR)│
            └─────────────────────────────┘
                             │
                             ▼
            ┌─────────────────────────────┐
            │      CALCULATE MEASURED       │   S202
            │     REGENERATIVE INTERVAL     │
            │     VALUE AT INTERVALS OF     │
            │ PREDETERMINED TIME PERIOD Ta │
            └─────────────────────────────┘
                             │
                             ▼
            ┌─────────────────────────────┐
            │    CALCULATE AVERAGE VALUE    │
            │    Ia OF EFFECTIVE VALUE OF   │   S203
            │  ARMATURE ELECTRIC CURRENT    │
            │        AT INTERVALS OF        │
            │ PREDETERMINED TIME PERIOD Ta │
            └─────────────────────────────┘
                             │            S204
                             ▼
            ┌─────────────────────┐   d-AXIS FLUX LINKAGE AVERAGE VALUE  λda
            │  CALCULATE ESTIMATED │   q-AXIS FLUX LINKAGE AVERAGE VALUE  λqa
            │   FLUX LINKAGE VALUE │   PRIMARY FLUX LINKAGE AVERAGE VALUE λ1a
            └─────────────────────┘
                             │
                             ▼      S205
                         ◇ ESTIMATED FLUX ◇         NO
                       ◇ LINKAGE VALUE ≦ FLUX ◇ ──────────────────────┐
                         ◇   LINKAGE SET   ◇                          │
                             ◇  VALUE? ◇                              │
                             │ YES                                    │
                             ▼          S206                          │
                         ◇   MEASURED   ◇           NO                │
                       ◇ REGENERATIVE INTERVAL ◇ ──────────┐          │
                       ◇ VALUE ≦ REGENERATIVE ◇            │          │
                         ◇  INTERVAL SET  ◇                │          │
                             ◇  VALUE? ◇                   │          │
                             │ YES    S207            S208 │     S209 │
                             ▼                             ▼          ▼
   ┌──────────────────────────┐  ┌──────────────────────┐  ┌──────────────────────┐
   │ ADJUST ELECTRIC CURRENT  │  │ INCREASE ELECTRIC     │  │ INCREASE ELECTRIC     │
   │  PHASE DIFFERENCE βT      │  │ CURRENT PHASE         │  │ CURRENT PHASE         │
   │ SUCH THAT Ia HAS MINIMUM  │  │ DIFFERENCE βT         │  │ DIFFERENCE βT         │
   │  VALUE (INCREASE OR       │  │ MONOTONOUSLY (INCREASE│  │ MONOTONOUSLY (INCREASE│
   │ DECREASE BY CHANGE        │  │ BY CHANGE WIDTH Δβ3)  │  │ BY CHANGE WIDTH Δβ1)  │
   │   WIDTH Δβ2)              │  └──────────────────────┘  └──────────────────────┘
   └──────────────────────────┘
                             │◄───────────────────────────────┘◄─────────┘
                             ▼
                    ( END PROCESSING )
```

## Fig.16

AVERAGE VALUE Ia OF EFFECTIVE VALUE
OF ARMATURE ELECTRIC CURRENT

ELECTRIC CURRENT
PHASE DIFFERENCE $\beta$ T

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011031910 A1
- US 2011057591 A
- JP 2011010430 B
- WO 2010116815 A
- US 2008116842 A
- EP 1657808 A
- JP 2009100558 B
- JP H10150795 B
- JP 4693904 B

**Non-patent literature cited in the description**

- Online MTPA Control Strategy for DTC Synchronous-Reluctance-Motor Drives. **SILVERIO BOLOGNANI et al.** IEEE TRANSACTIONS ON POWER ELECTRONICS. INSTITUTE OF ELECTRICAL AND ELECTRONICS ENGINEERS, 01 January 2011, vol. 26
- FLUX-LINKAGE CONTROL OF FULLY-PITCHED SWITCHED RELUCTANCE MOTORS. **WEINER C et al.** 8TH EUROPEAN CONFERENCE ON POWER ELECTRONICS AND APPLICATIONS. LAUSANNE, CH, SEPT. 7 - 9, 1999; [EPE. EUROPEAN CONFERENCE ON POWER ELECTRONICS AND APPLICATIONS. EPE ASSOCIATION, 07 September 1999, vol. 8
- **TATSUYA NISHIHARA ; SHIGEO MORIMOTO ; MASAYUKI SANADA.** Influences of Electrolytic-Capacitor-less-ness in IPMSM Speed Control System. *National Convention of The Institute of Electrical Engineers of Japan,* 2009, vol. 4-067, 116-117